# EUROPÄISCHE PATENTSCHRIFT

(11) **EP 3 745 065 B1**
(45) Veröffentlichungstag und Bekanntmachung des Hinweises auf die Patenterteilung: **07.06.2023**
(21) Anmeldenummer: 20401026.8
(22) Anmeldetag: 02.05.2020
(51) Int. Cl.: F26B 3/20, C10G 1/02, F26B 3/24, F26B 9/08, C10J 3/46, C10K 3/00

(54) **REAKTOR ZUR ERZEUGUNG VON WASSERDAMPF UND TROCKENSUBSTANZ**
REACTOR FOR PRODUCING WATER VAPOUR AND DRY SUBSTANCE
RÉACTEUR DE PRODUCTION DE VAPEUR D'EAU ET DE SUBSTANCE SÈCHE

(30) Priorität: 27.05.2019 DE 102019114060
(43) Veröffentlichungstag der Anmeldung: 02.12.2020
(73) Patentinhaber: Kohler, Hubert, 82380 Peissenberg (DE)
(72) Erfinder: Kohler, Hubert, 82380 Peißenberg (DE); Gschoßmann, Günther, 85232 Kreuzholzhausen (DE)
(74) Vertreter: Wenzel-Schäfer, Melanie

(56) Entgegenhaltungen:
- EP-A1- 1 990 106
- EP-A1- 2 940 105
- WO-A1-01/25709
- CN-U- 208 414 199
- DE-A1- 19 608 093
- JP-A- H0 947 747
- US-A- 5 426 866
- US-A1- 2014 116 938
- US-A1- 2018 118 599

## Beschreibung

Die Erfindung betrifft einen Reaktor zur Umwandlung einer biogenen Masse in eine kohlenstoffhaltige Trockensubstanz und zur Erzeugung von Wasserdampf, eine Gaserzeugungsvorrichtung zur Erzeugung von Wasserstoff mit einem solchen Reaktor, und ein Verfahren zur Erzeugung von Wasserdampf und kohlenstoffhaltiger Trockensubstanz.

Aus der WO 2009/095015 A1 ist es bekannt, komplexe biogene Stoffe (z.B. Tierkot, Holzabfalle, Klärschlamm, Abfälle) in eine kohlenstoffhaltige Trockensubstanz umzuwandeln. Die Trockensubstanz kann beispielsweise als Energieträger genutzt werden.

Die US 2008/0307703 A1 offenbart ein Verfahren und eine Anlage zur Herstellung von Synthesegas mit einem Reaktor in dem eine Mischung aus biogener Masse und geschmolzenem Metall verarbeitet wird.

Aus der US 2010/0092652 A1 ist einen Reaktor zur Verarbeitung von organischem Material mittels Pyrolyse und Hydrolyse zur Herstellung von Dünger- und Futtermitteln bekannt.

Die US 4,618,735 B offenbart ein Verfahren und eine Anlage zur Umwandlung von getrocknetem und zermahlenem Klärschlamm in flüssige Brennstoffe.

WO 01/25709 A1 zeigt eine Trocknungsvorrichtung für Klärschlamm für den Batchbetrieb. Im Behandlungsbehälter bzw. Reaktor ist ein Rührwerk vorgesehen, dass den Schlamm während des Trocknungsvorgangs bewegt und am Ende zu einem Auslass transportiert. Das Rührwerk ist hohl ausgebildet und wird mittels eines thermischen Fluids beheizt. Das thermische Fluid zirkuliert in einem geschlossenen Heizkreislaufs, indem es mittels eines elektrische oder gasbetriebenen Heizers auf eine bestimmte Temperatur aufgeheizt und dann gehalten wird. Als thermisches Fluid wird Öl verwendet.

US 5,426,866 B zeigt eine Trocknungsvorrichtung mit einem Reaktor in dem Klärschlamm in eine Zentrifugentrommel eingespeist und mittels einer Schraube zu Auslassöffnungen transportiert wird. Dort werden die feuchten Partikel in ein Trocknungsgehäuse geschleudert und von einer rotierenden Mahlvorrichtung zerkleinert während gleichzeitig heißes Trocknungsgas die feuchten Teilchen zu einem Auslassende in einem oberen Bereich des Gehäuses transportiert. Anschließend werden die Teilchen mit dem Gas zu einem Zyklon transportiert in welchem die feuchten/teilgetrockneten Teilchen vom Trocknungsgas getrennt werden.

EP 1 990 106 A1 zeigt ein organisches Abfallverwertungssystem bei dem aus dem Reaktor abgezogener Dampf über einen Zyklon aus dem System entfernt und einem Abwasserbehandlungssystem zugeführt wird. Mit einem externen Dampferzeuger wird Wasserdampf sowohl für den Reaktormantel als auch für den Füllraum erzeugt, wobei der Dampferzeuger über jeweils einen Leitungseingang mit dem Reaktormantel und dem Füllraum verbunden ist.

JP H09 4774 A zeigt einen Reaktor mit einem im Füllraum angeordneten Heizraum, wobei im Reaktor mittels eines hohlen Rührwerks umzuwandelnde Masse erhitzt wird. Das Rührwerk wird mit Heißwasser oder Wasserdampf versorgt, das/der in einem Boiler erzeugt wird.

EP 2 940 105 A1 zeigt eine Gaserzeugungsvorrichtung bei der mittels eines Blitztrockners (flash dryer) mit einer Verweildauer von nur wenigen Sekunden kohlenstoffhaltiger Brennstoff getrocknet wird. Bei der Trocknung entstehender Dampf wird einem Wassergasreaktor zugeführt. Der getrocknete Brennstoff wird einem Vergaser zur Erzeugung von Synthesegas zugeführt.

DE 196 08 093 A1 zeigt ein Verfahren zur Verwertung von Rest- und Abfallstoffen sowie heizwertarmen Brennstoffen in einem Zementofen.

US 2014/0116938 A1 zeigt ein chemisches Behandlungsverfahren zur Steigerung der Kapazität von Bioreaktoren bei dem unerwünschte Stoffe wie Schwermetalle aus Klärschlamm entfernt werden.

Der Erfindung liegt die Aufgabe zugrunde, einen Reaktor, eine Gaserzeugungsvorrichtung sowie ein Verfahren vorzusehen, bei denen das Trocknen von biogener Masse energieeffizient erfolgt und optional der entstehende Wasserdampf für eine Ressourcen schonende Folgeverwendung bereitsteht.

Diese Aufgabe wird durch einen Reaktor gemäß Anspruch 1, eine Verwendung des Reaktors in einer Gaserzeugungsvorrichtung gemäß Anspruch 6 bzw. durch ein Verfahren gemäß Anspruch 10 gelöst.

Gemäß Anspruch 1 ist ein Reaktor zur Umwandlung von wasserhaltiger biogener Masse und/oder kohlenstoffhaltigen Kunststoffen in eine kohlenstoffhaltige Trockensubstanz und zur Erzeugung von Wasserdampf vorgesehen. Vorzugsweise ist der nachfolgend beschriebene Reaktor ausgebildet verschiedenste auf Kohlenstoff basierte Materialien umzuwandeln, insbesondere ist der Reaktor ausgebildet eine nicht-sortenreine kohlenstoffhaltige Masse in eine kohlenstoffhaltige Trockensubstanz (Kohle) umzuwandeln, d.h. eine Verwendung sortenreiner Materialien ist nicht notwendig. Beispielsweise kann eine Mischung aus biogenen Materialien wie Tierkot, Holzabfällen, Klärschlamm, Grünschnitt oder kommunale Abfällen zusammen mit kohlenstoffhaltigen Kunststoffen wie Polypropylen oder Polyethylen umgewandelt werden. Sofern in der nachfolgenden Beschreibung nicht anders angegeben schließt der Begriff 'umzuwandelnde Masse' jedes auf Kohlenstoff basierende Material ein, einschließlich Biomasse und kohlenstoffhaltige Kunststoffe.

Der Reaktor weist auf: einen Reaktorbehälter mit einer Behälterwand; einen von der Behälterwand umgebenen Füllraum zur Aufnahme der umzuwandelnden Masse; ein innerhalb des Füllraums angeordnetes Rührwerk; eine Heizvorrichtung zum Aufheizen der im Füllraum aufgenommenen umzuwandelnden Masse, so dass die umzuwandelnde Masse aufgrund des Aufheizens im Füllraum Wasser in Form von Wasserdampf abgibt (Trocknung); einen Dampfausgang zum Auslassen des Wasserdampfs; zumindest einen Substanzbehälter zur Aufnahme der Trockensubstanz, wobei der zumindest eine Substanzbehälter über einen Auslass an der Behälterwand mit dem Füllraum verbunden ist; wobei das Rührwerk dazu ausgelegt ist, während der Trocknung eine Aggregation bzw. Verfestigung der Trockenmasse zu verhindern.

Der Reaktor führt eine Karbonisierung der umzuwandelnden Masse durch und der dabei entstehende Wasserdampf wird vorzugsweise in einem Folgeprozess (z.B. in der Gaserzeugungseinrichtung) weiterverwendet.

Durch das Rührwerk (kann auch als Mahlwerk oder Zerkleinerer bezeichnet werden) wird ein 'Verbacken' der umzuwandelnden Masse zu einer festen oder starren Trockensubstanz unterbunden. Dadurch kann die Trockenmasse besser gefördert werden und/oder muss nicht separat zerkleinert werden. Besonders vorteilhaft erfolgt die Zerkleinerung der Trockenmasse durch das Rührwerk derart, dass die Trockenmasse als Schüttgut behandelt werden kann (Transport, Lagerung, Weiterverarbeitung...). Zusätzlich oder alternativ kann das Rührwerk dazu ausgelegt sein, während der Trocknung der umzuwandelnde Masse die Masse umzuwälzen, und/oder das Rührwerk ist dazu ausgelegt, nach der Trocknung die Trockensubstanz in Richtung Auslass zu fördern, so dass die Trocknungssubstanz aus dem Füllraum in den zumindest einen Substanzbehälter gefördert wird.

Besonders vorteilhaft findet der Trocknungsprozess bzw. die Umwandlung im Reaktor unter Luft- bzw. Sauerstoffabschluss statt. Durch die Zerkleinerung der Trockenmasse mittels des Rührwerks kann die Trockenmasse auch kontinuierlich oder batchweise dem Reaktor entnommen werden, ohne dass bei der Entnahme (beispielsweise durch ein Ventil oder eine Schleuse) Sauerstoff oder Luft in den Reaktor eingetragen wird.

Die Heizvorrichtung weist einen Heizraum auf, der innerhalb des Füllraums angeordnet ist. Zusätzlich kann die Heizvorrichtung einen Thermomantel aufweisen, der von der Außenseite des Reaktorbehälters zumindest einen Teil der Behälterwand bedeckt. Vorteilhaft hat der Thermomantel auch eine gegen die Umgebung thermisch isolierende Funktion oder der Thermomantel ist als thermische Isoliereinrichtung um zumindest einen Teil der Behälterwand des Reaktors ausgebildet.

In Ausgestaltung weist das Rührwerk ein oder mehrere Rühr- und/oder Schaberelemente auf. Vorteilhaft ist das / sind die Schaberelemente mit geringem Abstand zur Behälterinnenwand und/oder im Bodenbereich des Füllraums angeordnet, so dass zwischen Innenwand und Schaberelement die Trockensubstanz zermahlen bzw. zerquetscht wird. In Ausgestaltung sind die /ist das Schaber- und/oder Rührelement als Förderelement ausgebildet, die/das bewirkt, dass die Trockensubstanz innerhalb des Füllraums gefördert wird, vorzugsweise in Richtung oder mit einer Vorzugsrichtung zu dem Auslass vom Füllraum zum Substanzbehälter.

Vorteilhaft wird über eine Verbindungsleitung zumindest ein Teil des aus dem Dampfausgang ausgelassenen Wasserdampfes dem Substanzbehälter zugeführt, wo der Wasserdampf beim Durchtritt durch die im Substanzbehälter gelagerte Trockensubstanz gereinigt wird. In Ausgestaltung weist zumindest ein Substanzbehälter eine zusätzliche Heizeinrichtung zum Aufheizen bzw. Nachtrocknen von im Substanzbehälter aufgefangener Trockensubstanz auf.

Vorteilhaft weist der Reaktor eine pH-Werteinstelleinrichtung auf, mit der ein Mittel (z.B. Zitronensäure) in den Füllraum zuführbar ist, so dass mit dem zugeführten Mittel der pH-Wert der umzuwandelnden Masse und/oder der Trockensubstanz einstellbar ist, beispielsweise auf einen Wert im sauren Bereich.

Mittels der Heizvorrichtung ist vorzugsweise die Temperatur und vorzugsweise der Druck im Füllraum derart einstellbar, dass während der Umwandlung der umzuwandelnden Masse keine oder im Wesentlichen keine Vergasung bzw. keine Pyrolyse der biogenen Masse und der auf Kohlenstoff basierenden Kunststoffe erfolgt.

In Ausgestaltung ist am Dampfausgang eine Druckeinstelleinrichtung angeordnet, mittels der der Wasserdampf aus dem Dampfausgang bei Erreichen eines vorgegebenen Arbeitsdrucks p_a und/oder bei Erreichen einer vorgegebenen Arbeitstemperatur T_a ausgelassen werden kann.

Vorteilhaft weist der Reaktor zumindest eine mit dem Füllraum verbundene Beschickungseinrichtung, die nicht Teil der Erfindung ist, zum Beschicken bzw. Beladen/Befüllen des Reaktorbehälters bzw. des Füllraums und zusätzliche oder alternativ zur Vorbehandlung der umzuwandelnden Masse auf. Die Beschickungseinrichtung kann zumindest einen Vorbehandlungsbehälter mit zumindest einem Zulauf für umzuwandelnde Masse aufweisen. Beispielsweise kann ein Zulauf für flüssige Masse und ein weiterer Zulauf für feste Masse vorgesehen sein. Alternativ kann feste und flüssige umzuwandelnde Masse über einen gemeinsamen Zulauf in den Vorbehandlungsbehälter eingefüllt werden.

Eine mit dem Vorbehandlungsbehälter verbundene ph-Wert-Einstellvorrichtung der Beschickungseinrichtung, die nicht Teil der Erfindung ist, ist zum Einstellen eines gewünschten pH-Werts der umzuwandelnden Masse im Behandlungsbehälter ausgebildet. Vorzugsweise ist der von der ph-Wert-Einstellvorrichtung eingestellte pH-Wert in einem Bereich in dem Stoffe wie beispielsweise Schwermetalle und/oder Phosphor aus der umzuwandelnden Masse heraus gelöst werden.

Die Beschickungseinrichtung, die nicht Teil der Erfindung ist, kann eine weitere Heizvorrichtung zum Aufheizen der im Vorbehandlungsbehälter aufgenommenen umzuwandelnden Masse aufweisen, so dass die umzuwandelnde Masse aufgrund des Aufheizens Wasser in Form von Wasserdampf abgibt (Trocknung). Beispielsweise ist die weitere Heizvorrichtung mittels Wasserdampf beheizbar, insbesondere mittels Wasserdampf, der im Reaktor (bei einer Umwandlung) erzeugt wurde und der weiteren Heizvorrichtung zugeleitet wird.

Vorzugsweise ist eine mit dem Behandlungsbehälter verbundene Reinigungsvorrichtung ausgebildet Flüssigkeit (Wasser mit den heraus gelösten Stoffen) aus dem Behandlungsbehälter abzuziehen, die abgezogene Flüssigkeit zu reinigen und die gereinigte Flüssigkeit wieder in den Behandlungsbehälter zurückzuführen. Zusätzlich oder alternativ kann die gereinigte Flüssigkeit bzw. das gereinigte Wasser in den Füllraum geleitet/gepumpt werden. Beispielsweise ist zum Transport der Flüssigkeit bzw. des Wassers zumindest eine Pumpe vorgesehen. Bei der Reinigung der vom Behandlungsbehälter abgezogenen Flüssigkeit werden die heraus gelösten (unerwünschten) Stoffe wie z.B. Schwermetalle entfernt, so dass nach der Reinigung reines oder im Wesentlichen reines Wasser vorliegt. Durch diese Vorbehandlung können unerwünschte Stoffe bereits vor Beginn der Behandlung/Umwandlung im Reaktor entfernt werden, so dass die mit dem Reaktor erzeugte kohlenstoffhaltige Trockensubstanz (Kohle) frei von diesen Stoffen ist und zusätzlich das gereinigte Wasser bedenkenlos für weitere Zwecke (z.B. als Dampf in der Gaserzeugungsvorrichtung) verwendet werden kann.

In Ausgestaltung weist die Beschickungseinrichtung eine Zerkleinerungsvorrichtung zum Zerkleinern/Homogenisieren von der Beschickungseinrichtung bzw. dem Vorbehandlungsbehälter zugeführter umzuwandelnder Masse auf, z.B. in Form eines Häckslers und/oder Mahlwerks. Vorzugsweise weist der Behandlungsbehälter mehrere Kammern bzw. Teilabschnitte auf, in denen die umzuwandelnde Masse zerkleinert, aufgeheizt, und/oder der pH-Wert eingestellt wird.

Gemäß Anspruch ist die Verwendung des Reaktors in einer Gaserzeugungsvorrichtung zur Herstellung von Wasserstoff vorgesehen. Die Gaserzeugungsvorrichtung weist auf: zumindest einen Reaktor nach einem der vorhergehenden Ansprüche zur Erzeugung von Wasserdampf; eine Synthesegaserzeugungseinrichtung zur Erzeugung von Synthesegas; und einen Dampfreformer, der ausgelegt ist, um aus Wasserdampf und Synthesegas Wasserstoff zu erzeugen, wobei dem Dampfreformer über eine erste Verbindungsleitung der Wasserdampf aus dem Reaktor zugeführt wird und über eine zweite Verbindungsleitung das Synthesegas aus der Synthesegaserzeugungseinrichtung zugeführt wird.

Vorteilhaft verbindet eine Fördereinrichtung den Substanzbehälter mit der Synthesegaserzeugungseinrichtung und ist dazu ausgelegt, die Trockensubstanz zur Synthesegaserzeugungseinrichtung zu fördern.

Eine Mahleinheit kann vorgesehen sein, die die Trockensubstanz aus dem Substanzbehälter zerkleinert, so dass die zerkleinerte Trockensubstanz der Synthesegaserzeugungseinrichtung als zerkleinerte Partikel, insbesondere als Granulat und/oder Staub, zugeführt werden kann. Vorteilhaft weist die Fördereinrichtung eine erste Fördereinheit zum Fördern der Trockensubstanz vom Substanzbehälter zur Mahleinheit und/oder eine zweite Fördereinheit zum Fördern der zerkleinerten Trockensubstanz von der Mahleinheit zur Synthesegaserzeugungseinrichtung auf.

Gemäß einer bevorzugten Ausgestaltung ist eine Gaserzeugungsvorrichtung zur Herstellung von Wasserstoff bereitgestellt. Die Gaserzeugungsvorrichtung weist zumindest einen Reaktor auf zur Umwandlung von wasserhaltiger biogener Masse und/oder kohlenstoffhaltigen Kunststoffen in eine kohlenstoffhaltige Trockensubstanz und zur Erzeugung von Wasserdampf, wobei der Reaktor aufweist: einen Reaktorbehälter mit einer Behälterwand; einen von der Behälterwand umgebenen Füllraum zur Aufnahme der umzuwandelnden Masse; eine Heizvorrichtung zum Aufheizen der im Füllraum aufgenommenen umzuwandelnden Masse, so dass die umzuwandelnde Masse aufgrund des Aufheizens im Füllraum Wasser in Form von Wasserdampf abgibt (Trocknung); einen Dampfausgang zum Auslassen des Wasserdampfs,
zumindest einen Substanzbehälter zur Aufnahme der Trockensubstanz, wobei der zumindest eine Substanzbehälter über einen Auslass an der Behälterwand mit dem Füllraum verbunden ist; wobei die Gaserzeugungsvorrichtung weiterhin aufweist:
eine Synthesegaserzeugungseinrichtung zur Erzeugung von Synthesegas; einen Dampfreformer, der ausgelegt ist, um aus Wasserdampf und Synthesegas Wasserstoff zu erzeugen, wobei dem Dampfreformer über eine erste Verbindungsleitung der Wasserdampf aus dem Reaktor zugeführt wird und über eine zweite Verbindungsleitung das Synthesegas von der Synthesegaserzeugungsvorrichtung zugeführt wird; und eine Fördereinrichtung, die den Substanzbehälter mit der Synthesegaserzeugungseinrichtung verbindet und dazu ausgelegt ist, die Trockensubstanz vom Substanzbehälter zur Synthesegaserzeugungseinrichtung zu fördern.

In Ausgestaltung ist innerhalb des Füllraums ein Rührwerk angeordnet, wobei das Rührwerk vorzugsweise dazu ausgelegt ist: während der Trocknung der umzuwandelnden Masse die Masse umzuwälzen, und/oder nach der Trocknung die Trockensubstanz in Richtung Auslass zu fördern, so dass die Trocknungssubstanz aus dem Füllraum in den zumindest einen Substanzbehälter gefördert wird, und/oder während der Trocknung eine Aggregation bzw. Verfestigung der Trockenmasse zu verhindern.

Vorzugsweise weist die Gaserzeugungsvorrichtung zumindest zwei Reaktoren auf, wobei ein Dampfausgang zum Auslassen von Wasserdampf aus dem Füllraum eines (ersten) Reaktors mit einem Heizraum einer Heizvorrichtung zum Aufheizen eines Füllraums eines nachfolgenden (zweiten) Reaktors verbunden ist. Dadurch kann nach dem Anlaufen des Umwandlungsprozesses im ersten Reaktor, der beim Prozess entstehende Wasserdampf zum Aufheizen von umzuwandelndem Material im nachfolgenden zweiten Reaktor verwendet werden. D.h. die (Wärme-)Energieströme können je nach Bedarf verschoben werden.

Gemäß Anspruch 10 ist ein Verfahren zur Umwandlung einer wasserhaltigen biogenen Masse und/oder kohlenstoffhaltigen Kunststoffen in eine kohlenstoffhaltige Trockensubstanz und zur Erzeugung von Wasserdampf vorgesehen. Das Verfahren weist die Schritte auf: Einfüllen der umzuwandelnden Masse in einen Füllraum eines Reaktors; Aufheizen der umzuwandelnden Masse im Füllraum auf eine vorgegebene Arbeitstemperatur T_a oder einen vorgegebenen Arbeitstemperaturbereich und Einstellen eines vorgegebenen Arbeitsdrucks p_a oder eines Arbeitsdruckbereichs; Auslassen von Prozessdampf aus dem Füllraum unter Beibehaltung der Temperatur bei der vorgegebenen Arbeitstemperatur oder im vorgegebenen Arbeitstemperaturbereich und unter Beibehaltung des Drucks bei dem vorgegebenen Arbeitsdruck oder im vorgegebenen Arbeitsdruckbereich; und während der Umwandlung der umzuwandelnden Masse zeitweise oder kontinuierliches Durchmischen und/oder Umwälzen der umzuwandelnden Masse im Füllraum, vorzugsweise mittels eines innerhalb des Füllraums angeordneten Rührwerks und/oder Mahlwerks.

Vorteilhaft werden die Temperatur bei der vorgegebenen Arbeitstemperatur T_a oder im vorgegebenen Arbeitstemperaturbereich und/oder der Druck bei dem vorgegebenen Arbeitsdruck p_a oder im vorgegebenen Arbeitsdruckbereich während einer vorgegebenen Arbeitszeitdauer Δt_a aufrechterhalten.

Vorzugsweise sind die Arbeitstemperatur T_a (bzw. Temperaturbereich) und/oder der Arbeitsdruck p_a (bzw. Druckbereich) derart, dass die umzuwandelnde Masse aufgeschlossen und Wasser aus dieser abgegeben wird, jedoch keine oder im Wesentlichen keine Vergasung bzw. Pyrolyse stattfindet.

In Ausgestaltung wird nach dem Ablauf der Arbeitszeitdauer Δt_a der Füllraum auf einen vorbestimmten Betriebsdruck p_b evakuiert. Optional wird während der Evakuierung des Füllraumes vom Arbeitsdruck p_a auf den Betriebsdruck p_b aus dem Füllraum Wasser in Form von Wasserdampf abgezogen; wobei vorzugsweise bei eingestelltem Betriebsdruck p_b eine vorbestimmte Haltetemperatur T_h der umzuwandelnden Masse zumindest zeitweise aufrechterhalten wird.

Vorteilhaft wird der aus dem Füllraum ausgelassene Prozessdampf einem Dampfreformer zur Erzeugung von Wasserstoff zugeführt.

In besonderer Ausgestaltung wird die im Reaktor aus der biogenen Masse bzw. den kohlenstoffhaltigen Kunststoffen umgewandelte Trockensubstanz zur Erzeugung von Synthesegas einer Synthesegaserzeugungseinrichtung zugeführt, wobei das erzeugte Synthesegas vorzugsweise einem Dampfreformer zur Erzeugung von Wasserstoff zugeführt wird, insbesondere dem Dampfreformer in Ausgestaltung wie hierin beschrieben.

Bei den hierin beschriebenen Verfahren oder beim Betrieb des hierin beschriebenen Reaktors sind die Betriebsparameter vorteilhaft wie folgt: die Arbeitstemperatur T_a liegt in einem Bereich von 170°C bis 250°C, insbesondere bei 183°C; und/oder der Arbeitsdruck p_a liegt in einem Bereich von 8 bar bis 20 bar, insbesondere 10 bar bis 11 bar; und/oder die Arbeitszeitdauer Δt_a beträgt von 1,50 Std. bis 6 Std., insbesondere 2 Std.; und/oder die vorbestimmte Haltetemperatur Th des evakuierten Füllraumes beträgt 50°C bis 100°C, insbesondere 75°C; und/oder die umzuwandelnde Masse hat nach Beendigung der Evakuierung des Füllraums einen Trockensubstanzgehalt TS_g von mindestens 50%, insbesondere mindestens 85 %.

Die folgenden Merkmale des Verfahrens und/oder die Betriebsfunktionen oder Merkmale des Reaktors sind bei dem oben und unten beschriebenen Verfahren, bei dem oben und unten beschriebenen Reaktor und/oder bei der oben und unten beschriebenen Gaserzeugungsvorrichtung als Einzelmerkmal oder als Kombination von Merkmalen in beliebiger Kombination oder Unterkombination anwendbar:
Das Verfahren weist ein oder mehrere der folgenden Verfahrensschritte oder der Reaktor / die Gaserzeugungsvorrichtung weist ein oder mehrere der folgenden Betriebsfunktionen und/oder Merkmale auf:
- Eine umzuwandelnde Masse wird in einem Füllraum eines Reaktors, insbesondere in einer geschlossenen Atmosphäre, auf eine Arbeitstemperatur aufgeheizt. Vorzugsweise erfolgt dies in einer ersten Phase des Verfahrens.
- Während des Aufheizens wird ein gewünschter Arbeitsdruck in dem Füllraum erreicht.
- Bei detektiertem Erreichen des Arbeitsdruckes wird dieser während einer Arbeitszeitdauer aufrechterhalten. Vorzugsweise entspricht die Arbeitszeitdauer einer zweiten Phase des Verfahrens.
- In dem Füllraum wird während einer Arbeitszeitdauer zumindest zeitweise Prozessdampf erzeugt und teilweise und/oder zeitweise ausgelassen.
- Nach Ablauf der Arbeitszeitdauer wird der Füllraum von dem Arbeitsdruck auf einen vorbestimmten Betriebsdruck evakuiert.
- Während der Evakuierung des Füllraumes wird aus dem Füllraum Wasser abgezogen.
- Bei eingestelltem Betriebsdruck wird eine vorbestimmte Haltetemperatur der umzuwandelnde Masse zumindest zeitweise aufrechterhalten.

Die Verfahrensschritte oder Betriebsfunktionen ermöglichen eine effiziente Aufbereitung komplexer biogener Stoffe wie z.B. Tierkot, Holzabfälle, Klärschlamm, Grünschnitt oder kommunale Abfälle sowie von kohlenstoffhaltigen Kunststoffen. Mit verhältnismäßig geringem Energieeinsatz kann aus der umzuwandelnden Masse eine hochwertige Trockensubstanz hergestellt werden. Die Trockensubstanz weist kohleartige Eigenschaften auf mit einem verhältnismäßig hohen Energiewert auf. Das Verfahren zur Herstellung der Trockensubstanz kann entsprechend auch als Verkohlungsverfahren bezeichnet werden.

Abhängig von der Einstellung einzelner der o.g. Verfahrensparameter wie Arbeitstemperatur, Arbeitsdruck, Arbeitszeitdauer, Betriebsdruck und Haltetemperatur können die Eigenschaften und die Qualität der herzustellenden Trockensubstanz beeinflusst werden. Auf diese Weise kann das Verfahren flexibel und energieeffizient an den gewünschten Verwendungszweck der Trockensubstanz angepasst werden.

Beispielsweise dient die Umwandlung der umzuwandelnden Masse der Müllentsorgung, der Produktion von Biokohle und/oder der Verwendung in einem Verfahren zur Erzeugung von Wasserstoff (Bio-Wasserstoff).

In einer bevorzugten Ausführungsform wird während des Verfahrens aus dem Füllraum ausgelassener Prozessdampf in einer weiteren Funktion zur Erzeugung von Wasserstoff verwendet. Hierzu wird der Prozessdampf insbesondere an einen Dampfreformer weitergeleitet. Hierdurch kann das Verfahren eine energiesparende Produktion von Wasserstoff unterstützen.

In einer weiteren bevorzugten Ausführungsform wird die durch das Verfahren hergestellte Trockensubstanz zur Erzeugung eines Synthesegases weiterverarbeitet, welches bei einem Dampfreformer zur Erzeugung von Wasserstoff benötigt wird.

Hierdurch wird die Kosteneffizienz des Verfahrens weiter gesteigert. Die Arbeitstemperatur bei dem Verfahren liegt vorzugsweise in einem Bereich von 170°C bis 250°C. Insbesondere liegt sie bei 183°C. Durch eine entsprechende Festlegung der Arbeitstemperatur kann der Trockensubstanzgehalt der umzuwandelnden Masse während des Verfahrens vorteilhaft beeinflusst werden.

Vorteilhaft liegt der Arbeitsdruck während des Verfahrens in einem Bereich von 8 bar bis 20 bar. Insbesondere liegt er bei 10 bar bis 11 bar. Hierdurch kann der Energieverbrauch beim Trocknen der umzuwandelnden Masse reduziert werden. Insbesondere ist eine geringere oder gar keine Verdampfungsenergie notwendig.

In einer bevorzugten Ausführungsform beträgt die Arbeitszeitdauer während des Verfahrens 1,50 Std. bis 6 Std., insbesondere 2 Std.

Der vorbestimmte Betriebsdruck beträgt vorzugsweise -0,5 bar bis -1 bar, insbesondere -0,75 bar. Verfahrenstechnisch einfach und kostengünstig wird der Füllraum nach der Evakuierung vorteilhaft mittels externen Gasdruckes auf atmosphärischen Druck ausgeglichen. Hierzu wird beispielsweise eine externe Gasdruckvorrichtung (z.B. CO, CO₂, N₂) bereitgestellt und zur Begasung mit dem Füllraum verbunden. Diese Verbindung wird vorzugsweise mittels eines Steuerventils aufrechterhalten oder unterbrochen.

Die vorbestimmte Haltetemperatur für die umzuwandelnde Masse bzw. Trockensubstanz im evakuierten Füllraum beträgt vorzugsweise 50°C bis 100°C, insbesondere 75°C. Mittels einer geeignet eingestellten Haltetemperatur kann der gewünschte Trockensubstanzgehalt auf energiesparende Weise erzielt werden.

Je nach Verwendungszweck der Trockensubstanz kann das Verfahren kostengünstig einen unterschiedlichen Trockensubstanzgehalt erzielen. Vorzugsweise wird ein Trockensubstanzgehalt von mindestens 50% erzielt. Erfindungsgemäß wird ein Trockensubstanzgehalt von mindestens 85%, insbesondere von mindestens 90% erzielt.

Der Reaktor weist vorteilhaft einen Füllraum zur Befüllung mit der umzuwandelnde Masse auf. Der Füllraum ist von einem Heizraum durchsetzt, so dass letzterer auf energieeffiziente Weise den Füllraum aufheizen kann. Außerdem ist Füllraum von einem Thermomantel zur Aufheizung des Füllraumes umgeben. Zur Ausleitung von Prozessdampf während der Herstellung der Trockensubstanz weist der Füllraum einen Dampfausgang auf.

Für eine verfahrenstechnisch einfache weitere Verarbeitung der hergestellten Trockensubstanz weist der Füllraum mindestens einen Auslassstutzen zum Auslassen der in Trockensubstanz umgewandelten umzuwandelnde Masse auf. Vorteilhaft ist der Auslassstutzen an einem in Schwerkraftrichtung unteren Bereich des Füllraumes angeordnet, so dass die Trockensubstanz mit geringem Verfahrensaufwand aus dem Füllraum transportiert werden kann.

Erfindungsgemäß weist der Heizraum einen Leitungseingang zum Einleiten von Wasser und/oder Wasserdampf auf.

In bevorzugten Ausführungsformen weist der Füllraum und/oder der Thermomantel jeweils mindestens einen Leitungseingang zur Einleitung von Wasser und/oder Wasserdampf auf. Hierdurch kann die jeweils benötigte Verdampfungsenergie flexibel rasch in unterschiedlichen Bereichen des Reaktors zur Verfügung gestellt werden.

Erfindungsgemäß ist ein Leitungseingang des Füllraumes mit einem Leitungsausgang des Heizraumes unterbrechbar verbunden.

In einer weiteren bevorzugten Ausführungsform ist ein Leitungseingang des Thermomantels mit einem Leitungsausgang des Heizraumes unterbrechbar verbunden. Hierdurch können der Thermomantel und/oder der Füllraum direkt durch den Heizraum mit Dampf versorgt werden. Dies unterstützt eine energieeffiziente Arbeitsweise des Reaktors.

Vorteilhaft weist der Füllraum ein bewegliches, insbesondere rotationsbewegliches, Rührwerk auf. Das Rührwerk wird durch eine Antriebseinheit angetrieben und ist vorzugsweise in einem in Schwerkraftrichtung unteren Bereich des Füllraumes angeordnet. Die Rotationsachse verläuft insbesondere horizontal. Das Rührwerk ist derart dimensioniert und ausgestaltet, dass es ein etwaiges Anbacken oder Anhaften der umzuwandelnden Masse an der Innenwand des Füllraumes vermeidet. Hierzu sind beispielsweise an der Rotationsachse paddelartige Rührarme angeordnet, die sich in radialer Richtung bezüglich der Rotationsachse erstrecken. Diese Rührarme sind insbesondere derart dimensioniert und ausgestaltet, dass sie mit einer Abschabwirkung an der Innenwand des Füllraumes das vorgenannte Vermeiden eines Anbackens oder Anhaftens der umzuwandelnden Masse unterstützen.

In Ausgestaltung kann das Verfahren vor dem Einfüllen umzuwandelnder Masse in einen Füllraum eines Reaktors die Schritte aufweisen:
Einfüllen der umzuwandelnden Masse in einen Vorbehandlungsbehälter,
Einstellen eines gewünschten ph-Werts der umzuwandelnden Masse zum Herauslösen von Stoffen wie Schwermetallen aus der umzuwandelnden Masse, und
Abziehen/Abpumpen von Flüssigkeit (mit gelösten unerwünschten Stoffen) aus dem Behandlungsbehälter, Reinigen der abgezogenen/abgepumpten Flüssigkeit und Zuführen der gereinigten Flüssigkeit in den Behandlungsbehälter und/oder in den Füllraum des Reaktors,
insbesondere vor oder nach dem Einstellen des gewünschten ph-Werts mit dem Schritt des Aufheizens der Masse im Behandlungsbehälter auf eine vorgegebene Vorbehandlungstemperatur oder einen vorgegebenen Vorbehandlungstemperaturbereich und Einstellen eines vorgegebenen Vorbehandlungsdrucks oder eines Vorbehandlungsdruckbereichs. Beispielsweise kann die umzuwandelnde Masse bis zum Eintreten einer Vorverkohlung, insbesondere bis zur Torfstufe, aufgeheizt werden. Auf diese Weise werden unerwünschte (Schad-) Stoffe wie z.B. Schwermetalle aus dem (geschlossenen) System entfernt, wobei die gereinigte Flüssigkeit bzw. das Wasser im Verfahren bedenkenlos wiederverwendet werden kann. Optional kann vor, nach oder zusammen mit dem Einfüllen von umzuwandelnder Masse in einen Füllraum zusätzlich umgewandelte Trockensubstanz in den Füllraum eingefüllt werden. Die zusätzlich eingefüllte Trockensubstanz (Kohle) kann z.B. Bindemittel in Klärschlamm binden, die den Kohlungsprozess der umzuwandelnden Masse im Reaktor behindern würden.

Die oben beschriebenen Merkmale, die unten in der detaillierten Beschreibung offenbarten Merkmale und die in den Ansprüchen offenbarten Merkmale des Verfahrens sind in beliebiger Kombination oder Unterkombination oder als Einzelmerkmale miteinander kombinierbar. Die Verfahrensmerkmale sind auch als Einzelmerkmale oder in beliebiger Unterkombination als Betriebsparameter oder als Funktion des Reaktors und/oder der Gaserzeugungsvorrichtung mit diesen kombinierbar. Umgekehrt sind die Merkmale des Reaktors und/oder der Gaserzeugungsvorrichtung als strukturelle Merkmale des Verfahrens mit diesem als Einzelmerkmale oder als Kombination von Merkmalen in beliebiger Kombination oder Unterkombination kombinierbar.

Das erfindungsgemäße Verfahren, der Reaktor und die Gaserzeugungsvorrichtung werden anhand der beigefügten Zeichnungen näher erläutert. Dabei zeigen:
- Fig. 1: eine perspektivische Darstellung eines Reaktors zur Herstellung kohlenstoffhaltiger Trockensubstanz in einer ersten Ausführungsform,
- Fig. 2: eine schematische Seitenansicht des Reaktors gemäß Fig. 1,
- Fig. 3: eine schematische Querschnittsansicht gemäß der Querschnittslinie III-III in Fig. 2,
- Fig. 4: ein Diagramm mit Darstellung des Verfahrensablaufs zur Herstellung der Trockensubstanz,
- Fig. 5: eine schematische Darstellung einer Anwendung des Reaktors in einer Gaserzeugungsvorrichtung zur Produktion von Wasserstoff.

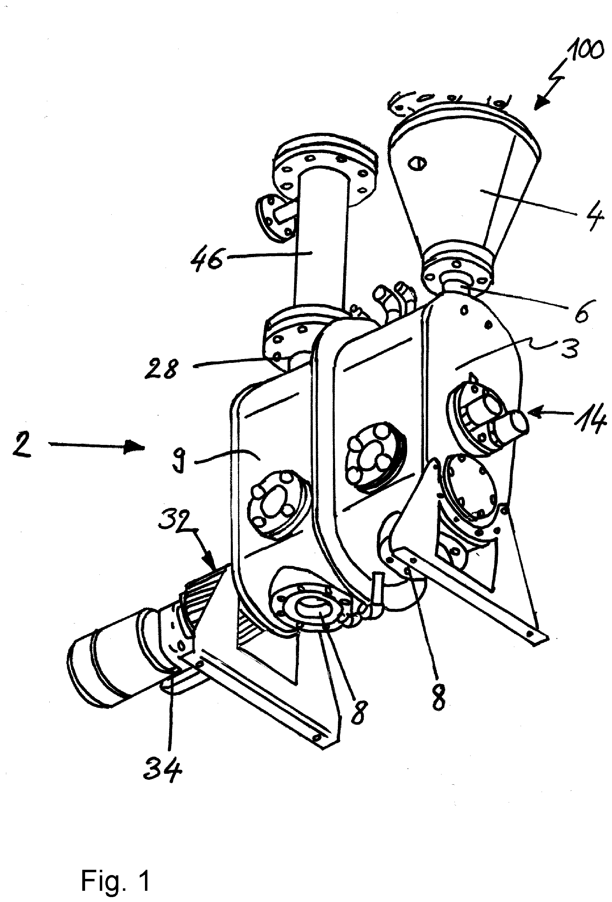

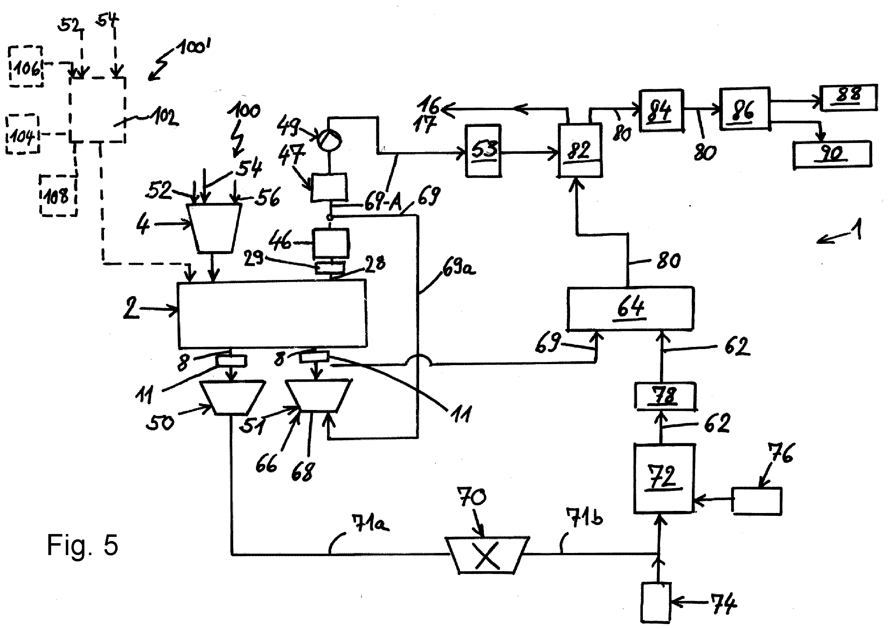

Fig. 1 zeigt eine perspektivische Ansicht eines Beispiels eines Reaktors 2 zur Wasserdampferzeugung aus biogener Masse und/oder kohlenstoffhaltigen Kunststoffen und zum Erhalten von kohle- bzw. braunkohleartigem organischem Material aus dem zugeführten Ausgangsmaterial aus wasserhaltiger biogener Masse bzw. kohlenstoffhaltigen Kunststoffen. D.h. die biogene Masse bzw. der kohlenstoffhaltige Kunststoff wird karbonisiert. Der Reaktor 2 kann für unterschiedliche Zwecke verwendet werden, z.B. zur Entsorgung komplexer Stoffe, insbesondere nicht sortenreiner Ausgangmaterialien, zur Herstellung von Biokohle oder zum Einsatz in einer Gaserzeugungsvorrichtung 1 (Fig. 5) zur Produktion von Wasserstoff. Vorzugsweise und wie unten detaillierter beschrieben ist der Reaktor 2 Teil einer Gaserzeugungsvorrichtung, wobei der Wasserdampf vom Reaktor 2 in einem Dampfreformer 64 in Wasserstoff umgewandelt wird (Fig. 5). Zur Steuerung des Betriebs des Reaktors 2 bzw. der Gaserzeugungsvorrichtung bzw. der nachfolgend beschriebenen Verfahren bzw. Verfahrensschritte weist der Reaktor 2 bzw. die Gaserzeugungsvorrichtung 1 eine Steuereinheit (nicht dargestellt) auf. Sofern nicht anders angegeben schließt der Begriff 'umzuwandelnde Masse' jedes auf Kohlenstoff basierende Material ein, einschließlich Biomasse und kohlenstoffhaltige Kunststoffe.

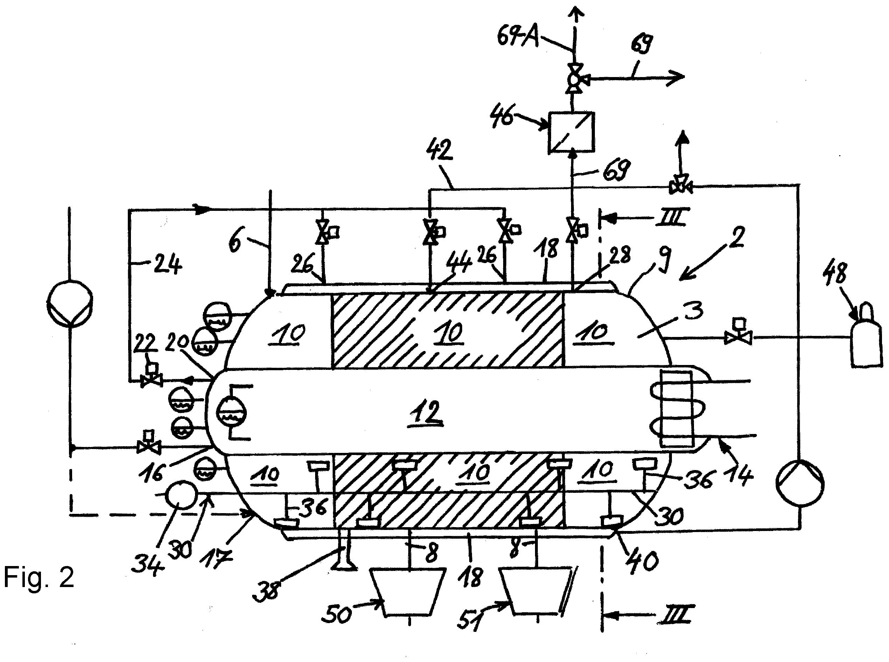

Der Reaktor 2 weist einen Reaktorbehälter 3 mit einer Behälterwand 9 auf, die einen Füllraum 10 des Reaktors 2 umgibt. Mittels einer Beschickungseinrichtung 100 kann der Reaktorbehälter 3 mit umzuwandelnder Masse beschickt werden, z.B. ist am Reaktor 2 ein beispielsweise trichterförmiger Beladungsbehälter 4 für die Zufuhr von nicht sortenreinem umzuwandelnden Ausgangsmaterial, wie biogener Masse (z.B. Tierkot, Holz, Klärschlamm) und kohlenstoffhaltigen Kunststoffen, angeordnet. Über einen Einfüllstutzen 6 wird die umzuwandelnde Masse in den Füllraum 10 des Reaktors 2 eingefüllt. Dabei hat die umzuwandelnde Masse einen Trockensubstanz-Gehalt TS_g von vorzugsweise 5% bis 30% (Gewichts-%). In dem Reaktor 2 wird die umzuwandelnde Masse auf noch zu beschreibende Weise in eine kohlenstoffhaltige Trockensubstanz (kohle- bzw. braunkohleartig) umgewandelt. Diese Trockensubstanz wird über mindestens einen Ausgang bzw. Auslassstutzen 8 aus dem Reaktor 2 ausgelassen und kann dann für unterschiedliche Zwecke weiterverwendet werden. Beispielsweise kann die Trockensubstanz im weiteren Verfahren zur Herstellung von Synthesegas unter Zufuhr von Wasserstoff verwendet werden - s.u.. Über den Einfüllstutzen 6 gelangt die umzuwandelnde Masse vom Beladungsbehälter 4 in den Füllraum 10 des Reaktors 2 (Fig. 2). Dem Füllraum 10 ist eine Heizeinrichtung 14 zugeordnet. Vorzugsweise ist die Heizeinrichtung in einem Heizraum 12 angeordnet oder mit diesem verbunden. Vorzugsweise ist der Heizraum 12 innerhalb des Füllraums 10 angeordnet oder thermisch mit einer Wand des Füllraums verbunden. Im dargestellten Beispiel erstreckt sich der Heizraum 12 im Inneren des Füllraums 10 (vorzugsweise in Längsrichtung des Füllraums), so dass der Heizraum an seinem Außenumfang die Heizwärme in den Füllraum 10 abgibt. Der Heizraum 12 ist dazu ausgelegt, die umzuwandelnde Masse zu erwärmen und das in der umzuwandelnden Masse enthaltene Wasser auf- bzw. auszukochen.

Vorzugsweise wird für dessen Heizfunktion in den Heizraum 12 Dampf eingetragen. Erfindungsgemäß kann der Dampf in dem Heizraum 12 selbst erzeugt werden oder von außen in den Heizraum 12 transportiert werden. Bei der Ausführungsform gemäß Fig. 2 wird der Dampf in dem Heizraum 12 erzeugt, indem die an den Heizraum 12 gekoppelte Heizungseinrichtung 14 Wärmeenergie in den Heizraum 12 einspeist und über einen Leitungseingang 16 Wasser in den Heizraum 12 zugeführt wird. Das Wasser wird beispielsweise in einem geeigneten Wasserbehälter bereitgestellt, in einem Wasserkreislauf vorgewärmt und zum Leitungseingang 16 transportiert. Vorzugsweise ist oder weist die Heizeinrichtung 14 eine elektrische Heizung auf und/oder die benötigte Heizleistung lässt sich bedarfsabhängig einstellen oder regeln. Anstelle einer elektrischen Heizung kann auch eine Befeuerung beispielsweise mittels Gas erfolgen. Die Heizeinrichtung kann wie dargestellte an einem Ende des Heizraums 12, innerhalb des Heizraums oder über ein Zirkulationssystem mit dem Heizraum verbunden sein, wobei bei letzterem der Wasserdampf extern erzeugt und in den Heizraum eingeleitet wird. Anstelle der Erhitzung des Heizraums 12 mittels Wasserdampf kann auch die direkte Erhitzung des Heizraums bzw. der Wände des Heizraums mit der Heizeinrichtung 12 erfolgen. Vorzugsweise wird der Heizraum mit Dampf erhitzt, weil dann auch heißer Dampf, der an anderer Stelle des Gesamtprozesses als Abfallprodukt vorliegt, zugeführt werden kann.

Im Heizraum 12 wird das zugeführte Wasser beispielsweise bei 16 bar bis 25 bar auf 203°C bis 225°C aufgeheizt und auf dieser Temperatur mittels der Heizeinrichtung 14 gehalten, um das Wasser aus der umzuwandelnden Masse auszutreiben.

Vorzugsweise ist der Füllraum 10 ist von einem Thermomantel 18 umgeben, der dem zusätzlichen Aufheizen des Füllraumes 10 dient. In Ausgestaltung kann das Erhitzen der umzuwandelnden Masse im Reaktor 2 ausschließlich über den Thermomantel erfolgen. Vorzugsweise wirkt der Thermomantel auch zur thermischen Isolierung des Reaktorinneren gegenüber der Umgebung des Reaktors. In Ausgestaltung kann der Thermomantel 18 auch ausschließlich zur thermischen Isolierung des Reaktors vorgesehen sein.

Beim dargestellten Beispiel wird in den Thermomantel Wärmeenergie bzw. Dampf eingetragen. Bei der Ausführungsform gemäß Fig. 2 erfolgt die Zufuhr von Dampf über eine Verbindungsleitung aus dem Heizraum 12 indem der Dampf zur Innenheizung erzeugt bzw. zugeführt wird. Beispielsweise erfolgt die Dampfzufuhr derart, dass der Heizraum 12 über einen Leitungsausgang 20, ein Steuerventil 22, eine Verbindungsleitung 24 und mindestens einen Leitungseingang 26 des Thermomantels 18 Dampf an den Thermomantel 18 abgibt. Somit kann Dampf bedarfsweise in den Thermomantel 18 geleitet werden, wenn die Heizleistung des Heizraumes 12 nicht ausreichen sollte und die Fläche zum Aufheizen der Biomasse vergrößert werden soll.

Optional kann Dampf, der im Heizraum 12 erzeugt wird oder der dem Heizraum zugeführt wird, zur direkten Beheizung der umzuwandelnden Masse und zur Einbringung von Wasser in Form von Dampf in den Füllraum 10 eingeleitet werden, um beispielsweise das Aufheizen zu Beschleunigen oder bei vorzeitiger Erschöpfung der Dampferzeugung aus der umzuwandelnden Masse zur Bereitstellung von Wasserdampf. Beispielsweise kann zur direkten Beheizung der umzuwandelnden Masse Kondensat und/oder Dampf aus dem Thermomantel18 in den Füllraum 10 geleitet werden. Hierzu ist beispielsweise ein Mantelausgang 40 des Thermomantels 18 über eine Verbindungsleitung 42 mit einem Leitungseingang 44 des Füllraums 10 verbunden.

Zur Einbringung von Wasser in den Füllraum 10 kann optional ein Leitungseingang 17 vorgesehen sein. Der Leitungseingang 17 ist dann vorzugsweise mit dem selben Wasserbehälter oder mit der selben Wasserquelle verbunden wie der Leitungseingang 16 des Heizraumes 12.

Während des noch zu beschreibenden Verfahrensablaufes entsteht im Füllraum 10 Prozessdampf. Dieser wird zumindest teilweise aus einem Dampfausgang 28 des Füllraumes 10 ausgelassen und beispielsweise zur Erzeugung von Wasserstoff an einen Dampfreformer weiter geleitet. Vorzugsweise ist am Dampfausgang 28 eine Druckeinstelleinrichtung 29 angeordnet, mit der sich das Auslassen des Dampfes 69 derart einstellen bzw. regeln lässt, dass der Wasserdampf bei Erreichen eines vorgegebenen Druckwertes im Füllraum 10 ausgelassen wird, beispielsweise bei Erreichen des unten beschriebenen Arbeitsdrucks p_a (z.B. 10 bar).

In dem in Schwerkraftrichtung unteren Bereich des Füllraumes 10 ist ein über eine Drehachse 30 bewegliches Rührwerk 32 angeordnet. Das Rührwerk ist z.B. über eine externe Motoreinheit 34 drehbeweglich antreibbar. An der Drehachse 32 sind mehrere paddelartige Rührarme 36 angeordnet. Diese sind derart dimensioniert, dass ein etwaiges Anhaften oder Anbacken der umzuwandelnden Masse an der Innenwand des Füllraumes 10 vermieden wird. Außerdem fördert das rotierende Rührwerk 32 durch das Durchmischen eine rasche und effiziente Wärmeübertragung innerhalb der umzuwandelnden Masse. Während des Verfahrensablaufes kann das Rührwerk 32 für eine kontinuierliche Durchmischung der umzuwandelnden Masse sorgen, wodurch eine etwaige Bildung von Agglomeraten vermieden wird.

Der Füllraum 10 ist in seinem unteren Bereich mit einem Ablassstutzen 38 fluidisch verbunden. Über diesen Ablassstutzen 38 kann von der umzuwandelnde Masse im Füllraum 10 abgepresstes Restwasser abgeleitet werden. Alternativ oder zusätzlich kann das Restwasser über den oder die Auslassstutzen 8 abgelassen werden.

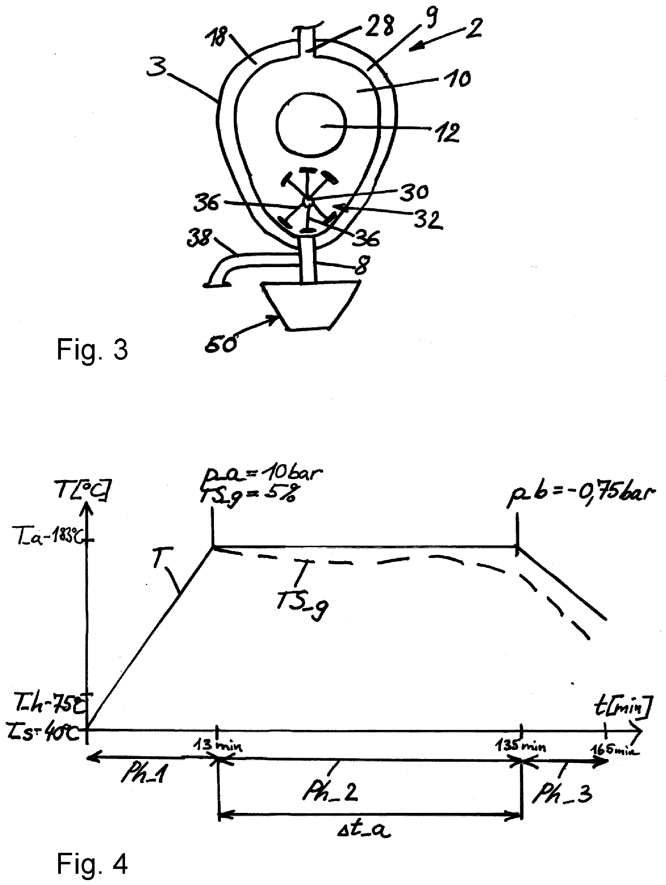

In Fig. 4 ist der Ablauf des Verfahrens in Hinsicht auf das Trocknen der umzuwandelnden Masse bzw. in Hinsicht auf die Erzeugung von Dampf aus der umzuwandelnden Masse dargestellt. Die umzuwandelnde Masse wird unter Ausschluss von Sauerstoff Karbonisiert (hydrothermale Karbonisierung), wobei jedoch Temperatur und Druck derart eingestellt sind, dass keine Pyrolyse bzw. Vergasung der biogenen Masse und/oder kohlenstoffhaltigen Kunststoffe erfolgt. Der Verfahrensablauf kann in drei Phasen Ph_1, Ph_2 und Ph_3 eingeteilt werden.

Die erste Phase Ph_1 läuft vorzugsweise im Zeitraum von 0 bis beispielsweise 15 min. In diesem Zeitraum wird die umzuwandelnde Masse im Füllraum 10 ausgehend von einer Starttemperatur T_s = 40°C auf eine Arbeitstemperatur T_a von vorzugsweise 183°C aufgeheizt. Zum Aufheizen werden der Heizraum 12 und/oder der Thermomantel 18 und/oder eine direkte Dampfzufuhr in den Füllraum 10 über dessen Leitungseingang 44 eingesetzt. Da im Füllraum 10 eine geschlossene Atmosphäre herrscht, steigt der Druck im Füllraum 10 durch die Dampferzeugung an. Der Füllraum 10 wird nach dem Einfüllen der umzuwandelnden Masse sofort aufgeheizt, insbesondere wird er vor dem Aufheizen nicht evakuiert, so dass der Füllraum 10 schnell und (energie)effizient auf den gewünschten Arbeitsdruck und Arbeitstemperatur gebracht werden kann. Die Arbeitstemperatur T_a ist dabei so gewählt, dass bei der umzuwandelnden Masse keine Pyrolyse stattfindet und stattdessen nur effizient das Wasser ausgetrieben und das organische Material effizient aufgeschlossen werden kann. Im Wesentlichen läuft die Gesamtreaktion unter Freisetzung von Energie (exotherm) ab und bedarf zur Auslösung lediglich der Zufuhr von Aktivierungsenergie. Eine Restfeuchtigkeit bleibt bei der Umwandlung von der umzuwandelnden Masse zur Trockensubstanz noch erhalten. Die Arbeitstemperatur T_a liegt vorzugsweise im Bereich von 160 bis 220°C, vorzugsweise von 170 bis 200°C, von 175 bis 190°C und besonders bevorzugt bei ungefähr 180°C, 183°C oder 185°C.

Nach Erreichen eines Arbeitsdruckes p_a = 10 bar wird dieser Druck (und vorzugsweise die Temperatur T_a von 183°C) durch Ablassen von Dampf aus dem Dampfausgang 28 für eine Arbeitszeitdauer Δt_a von beispielsweise 120 min aufrechterhalten (Phase Ph_2). Dabei wird vorzugsweise nur noch über den Thermomantel 18 geheizt und Dampf in dem Füllraum 10 produziert. In dieser Phase Ph_2 wird der Arbeitsdruck p_a zumindest unter Einhaltung einer vorbestimmten maximalen Druckabweichung p_ab-max aufrechterhalten. Die maximale Druckabweichung p_ab-max beträgt, z.B. ±1 bar oder ±0,5 bar, so dass der Arbeitsdruck p_a in der Phase Ph_2 eine Schwankung zwischen 10 bar bis 9 bar oder zwischen 9,5 und 10,5 bar aufweisen kann. D.h. das Verfahren wird mittels der Steuereinheit des Reaktors 2 so gesteuert, dass auch während des Auslassens von Prozessdampf aus dem Füllraum 10 sowohl die Temperatur bei der vorgegebenen Arbeitstemperatur T_a oder im vorgegebenen Arbeitstemperaturbereich als auch der Druck bei dem vorgegebenen Arbeitsdruck p_a oder im vorgegebenen Arbeitsdruckbereich beibehalten wird.

In dieser Phase Ph_2 brechen längerkettige Kohlenwasserstoffe auf und der Trockensubstanzgehalt TS_g der umzuwandelnden Masse schwankt durch Ablassen von Prozessdampf aus dem Füllraum 10 und/oder durch Zuführen von Wasser bzw. Dampf über den Leitungseingang 44 in den Füllraum 10. Diese Schwankung ist in Fig. 4 anhand der gestrichelten Kennlinie TS_g erkennbar.

Nach ca. 100 min. Dauer des Prozesses seit Prozessstart wird dem Füllraum 10 kein Wasser mehr zugeführt und die im Füllraum 10 vorhandene Flüssigkeit bzw. Wasser verdampft, bis ein gewünschter Trockensubstanzgehalt TS_g der Biomasse am Ende der Phase Ph_2 erreicht wird. Dabei wird das Entziehen von Prozessdampf aus dem Füllraum 10 in Richtung eines Dampfreformers 64 zur Erzeugung von Wasserstoff gestoppt.

Am Ende der Phase Ph_2 liegt die umgewandelte Masse (basierend auf biogener Masse und/oder kohlestoffhaltigen Kunststoffen) als Trockensubstanz kohleartig vor.

Anschließend wird zu Beginn der Phase Ph_3 der Füllraum 10 auf einen vorbestimmten Betriebsdruck p_b evakuiert. Dies erfolgt vorzugsweise mittels einer geeigneten Vakuumpumpe 49. Der vorbestimmte Betriebsdruck p_b liegt vorzugsweise in einem Bereich von -0,5 bar bis -1 bar, liegt insbesondere -0,75 bar, also unterhalb des Atmosphärendruck. Absolut liegt der Betriebsdruck p_b nach dem Evakuieren somit in einem Bereich von 0,5 bis 0 bar, vorzugsweise bei 0,25 bar.

Parallel wird die umzuwandelnde Masse bzw. Trockensubstanz auf eine Haltetemperatur T_h (z.B. 75°C) gebracht bzw. gehalten, wodurch im Füllraum 10 weiteres Wasser verdampfen kann. Dieser Dampf wird über den Dampfausgang 28 abgezogen und vorzugsweise über eine Filtereinheit 46 gereinigt, bevor er als Abdampf 69-A in einen Kondensator 47 (vorzugsweise mit integrierter Kühlung; Wassertemperatur z.B. ≤ 60°C) geleitet wird. Das so entstandene Kondensat wird vorzugsweise dem Reaktor 2 als Wasser während des Verfahrens bzw. Prozesses wieder zugeführt, indem es zunächst an einen Wasserbehälter 53 geleitet und danach als Wasser bedarfsweise an einen Wärmetauscher 82 abgegeben wird. Dort findet eine Erwärmung des Wassers durch das Abkühlen des Wasserstoffs statt.

Das entstandene erwärmte Wasser oder Wasserdampf wird dann bedarfsweise wieder den Leitungseingängen 16 und/oder 17 zugeführt. Hierdurch ist in der Gaserzeugungsvorrichtung 1 in dieser Hinsicht ein geschlossener Kreislauf vorgesehen. Aus der Gaserzeugungsvorrichtung 1 dringen keinerlei Dampf oder irgendwelche andere Emissionen nach außen. Die Gaserzeugungsvorrichtung 1 ist somit emissionsfrei.

Nach der Phase Ph_3 wird der evakuierte Füllraum 10 mittels eines Gases aus einer externen Gasdruckvorrichtung 48 bzw. Gasquelle wieder auf atmosphärischen Druck aufgefüllt. Das zugeführte Gas von der Gasquelle ist z.B. CO, CO₂, N₂ - alternativ wird der Füllraum 10 mittels Umgebungsluft auf Atmosphärendruck geflutet.

Danach wird die Trockensubstanz je nach Bedarf in einen oder beide vorhandene Substanzbehälter 50, 51 transportiert (Fig. 5), welche jeweils mit einem der beiden Auslassstutzen 8 verbunden sind. Anstelle der beiden Substanzbehälter kann auch nur ein Substanzbehälter 50 oder vorzugsweise 51 vorgesehen sein. Das Rührwerk 34 unterstützt aufgrund seiner Geometrie und Dimensionierung den Transport der erzeugten Trockensubstanz aus dem Füllraum 10 in die Substanzbehälter 50, 51. In Ausgestaltung ist am Auslassstutzen 8 eine Schleuse oder ein Ventil 11 angeordnet, so dass der Durchgang zwischen dem Füllraum 10 und dem Substanzbehälter 50, 51 zur Entnahme der Trockensubstanz geöffnet werden kann und vorzugsweise während zumindest des anfänglichen Trockenprozesses geschlossen ist (beispielsweise während der Phasen Ph_1 und/oder Ph_2).

Vorzugsweise ist am Auslass bzw. Auslassstutzen 8 des Reaktorbehälters 3 zum Substanzbehälter 50 und/oder zum Substanzbehälter 51 (jeweils) ein Verschlusselement (nicht dargestellt) vorgesehen, mit dem bzw. mit denen der Durchgang zwischen Füllraum 10 und Substanzbehälter 50, 51 verschließbar ist/sind und das/die zum Ausgeben der Trockensubstanz vom Reaktor zu dem/den Behältern 50, 51 zu öffnen sind. Das Verschließelement ist beispielsweise ein Schieber am Auslassstutzen 8. Das Öffnen erfolgt nach dem Verdampfen des Wassers aus der umzuwandelnden Masse und das/die Verschlusselemente sind während des Verdampfens geschlossen. Vorzugsweise wirkt das Rührwerk aufgrund der Ausrichtung und Stellung der Rührarme 36 bzw. Schaber so, dass die Trockensubstanz entlang der Innenseite der Behälterwand 9 in Richtung Auslass 8 gefördert wird.

Wie bereits erwähnt wird während der Dampferzeugung (vorzugsweise während der Phasen Ph_1, Ph_2 und Ph_3) das Rührwerk 34 kontinuierlich oder wiederholt intervallweise betrieben. Dies verbessert den Wärmeaustausch und die Wasserdampfabgabe. Zusätzlich wird durch die mechanische Einwirkung auf die umzuwandelnde Masse eine Zerkleinerung und Verhinderung der Agglomeration bewirkt, so dass eine homogene und kleinkörnige Trockensubstanz entsteht. Vorzugsweise sind die außenliegenden Kanten der Rührarme 36 des Rührwerks 34 bei der nähesten Annäherung eines Rührarms 36 an eine Innenwand des Füllraums 10 nur wenige Millimeter oder Zentimeter von der Innenwand entfernt, so dass ein (Vor-)Mahleffekt eintritt. Vorzugsweise wirkt das Rührwerk 34 als 'Schaber' und/oder als 'Zerhacker' der über die Motoreinheit 34 des Rührwerks angetrieben wird. Zusätzlich oder alternativ ist im Füllraum 10 ein Zerhacker 58 angeordnet (nicht dargestellt), welcher von einer Antriebseinheit (nicht dargestellt) angetrieben wird.

Durch diese (kombinierte) Wirkung wird über den Prozessablauf die umzuwandelnde Masse umgewandelt in eine Trockensubstanz in Form von granulatartiger Biokohle mit einer feinen Körnung (z.B. 1 mm bis 4 mm) und mit einem Trockensubstanzgehalt TS_g von mindestens 50%, besonders vorteilhaft von mindestens 85% und insbesondere von mindestens 90% (Angabe in Gewichts% in Bezug auf die Gesamtmasse der Trockensubstanz, die noch Restfeuchtigkeit enthält). Somit wird es im Vergleich zu anderen Verfahren vermieden, dass nach Ende der Trocknungsphase ein Pressling oder ein Kuchenpacken im Reaktor vorliegt und als Ganzes entnommen werden muss.

Vorzugsweise wird vor, nach oder zusammen mit dem Einfüllen von umzuwandelnder Masse (biogene Masse/Kunststoffe) in den Füllraum 10 zusätzlich bereits umgewandelte Trockensubstanz eingefüllt. Dies ist vorteilhaft bei der Umwandlung von z.B. mit Bindemitteln versehenem Klärschlamm, da die Bindemittel den Umwandlungsprozess im Reaktor 2 behindern würden. Die kohleartige Trockensubstanz bindet das dem Klärschlamm beigemischte Bindemittel, so dass das Bindemittel den weiteren Umwandlungsprozess des Ausgangsmaterials nicht mehr beeinträchtigen können.

Zumindest einer der Substanzbehälter 50, 51 kann eine zusätzliche Heizeinrichtung (nicht dargestellt) aufweisen, um die im Behälter aufgefangene Trockensubstanz aufzuheizen und weiter zu trocknen.

In Fig. 5 ist die Verwendung des Reaktors 2 in einer Gaserzeugungsvorrichtung 1 zur Produktion von Wasserstoff dargestellt. Zunächst wird umzuwandelnde Masse über einen Zulauf 52 für flüssige Stoffe und/oder einen Zulauf 54 für Feststoffe in den Behälter 4 gefüllt. Der Behälter 4 hat beispielsweise ein Fassungsvolumen von 20 Liter (Versuchsreaktoren) bis 20.000 Liter, vorzugsweise von 300 bis 4.000 Liter, weiter vorzugsweise von 500 bis 1.500 Liter. Weiterhin hat der Behälter 4 einen Eingang 56 für ein pH-Werteinstellmittel (z.B. Zitronensäure) zur Einstellung des pH-Wertes der eingefüllten umzuwandelnden Masse dient. Durch Einstellen eines geeigneten pH-Wertes können problematische Stoffe (z.B. Schwermetalle) in der herzustellenden Trockensubstanz bzw. Biokohle gebunden bleiben, so dass solche Stoffe nicht im Wasser des Füllraumes 10 vorhanden sind. Vorzugsweise wird der pH-Wert durch das Mittel so eingestellt, dass die umzuwandelnde Masse im sauren Milieu bleibt, vorzugsweise wird der pH-Wert der umzuwandelnden Masse eingestellt auf einen Wert im Bereich von 3 bis 5.

Grundsätzlich wird bei der Gaserzeugungsvorrichtung 1 mindestens ein Substanzbehälter 50, 51 als Lagerbehälter für die Trockensubstanz bzw. Biokohle bereitgestellt, um über weitere, noch zu beschreibende Verfahrensschritte ein Synthesegas 62 zu produzieren, welches einem Dampfreformer 64 zugeführt wird. Der zweite Substanzbehälter 51 dient in dem vorliegenden Ausführungsbeispiel vorzugsweise zusätzlich als eine Reinigungseinheit 66 zur Reinigung des Prozessdampfes 69, der über den Dampfausgang 28 aus dem Füllraum 10 abgezogen und dem Dampfreformer 64 zugeführt wird. Zu diesem Zweck wird zumindest ein Teil des Wasserdampfes aus dem Prozessdampfausgang 28 über eine Verbindungsleitung 69a dem Substanzbehälter 51 zugeführt. Der Substanzbehälter 51 weist einen perforierten Siebboden 68 auf, über den der zugeführte Prozessdampf 69 zur Reinigung in den Substanzbehälter 51 geleitet wird und die Trockensubstanz gleichmäßig durchströmt. Bei dieser Dampfreinigung können unerwünschte Stoffe wie z.B. Öle und Verschmutzungen vom Prozessdampf 69 abgeschieden werden. Aufgrund der Eigenschaften der Trockensubstanz ähnlich einer Aktivkohle kann es vorteilhaft u.a. zu einer adsorptiven Bindung von Kohlenwasserstoffen kommen. In Ausgestaltung erfolgt die Reinigung des Prozessdampfes 69 in einer Reinigungseinheit 66, die separat vom Reaktor 2 angeordnet ist und in der optional ebenfalls die Trockensubstanz als Filtersubstrat wirkt. In weiterer Ausgestaltung wird auf die Reinigungseinheit 66 verzichtet und der Prozessdampf 69 direkt dem Dampfreformer 64 zugeführt.

Optional kann die Trockensubstanz aus dem Substanzbehälter 51 bzw. aus der Reinigungseinheit 66 nach einer Verwendung zur Dampfreinigung verbrannt und auf diese Weise zur Energiegewinnung für die Dampferzeugung für den Reaktor 2 genutzt werden. Hierdurch kann bei dem Gesamtverfahren eine wesentliche Energieeinsparung erzielt werden.

Die Trockensubstanz des Substanzbehälters 50 (und optional des Substanzbehälters 51) wird zunächst mittels einer ersten Fördereinheit 71a zu einer Mahleinheit 70 transportiert (z.B. über eine Förderschnecke), um dort (noch weiter) zerkleinert zu werden. In der Mahleinheit 70 wird die Trockensubstanz zu einem Granulat (z.B. 0,1 mm Korngröße) bzw. zu Kohlestaub zermahlen, um sie für eine Gasumgebung förderfähig zu machen. Danach wird die zermahlene Trockensubstanz mittels einer zweiten Fördereinheit 71b einer Reaktoreinheit 72 (Synthesegaserzeugungseinrichtung) zugeführt. Die erste und zweite Fördereinheit 71a, 71b bilden eine Fördereinrichtung, die die kohlenstoffhaltige Trockensubstanz aus dem Reaktor 2 bzw. aus dem(den) Substanzbehälter(n) der Reaktoreinheit 72 zuführen.

In der Reaktoreinheit 72 findet eine Vergasung der zermahlenen Trockensubstanz statt. Hierdurch entsteht das ggf. noch zu reinigende Synthesegas 62. Vorzugsweise werden bei einem Batch-Durchlauf (also bei der Wasserdampferzeugung und -verwertung einer einmaligen Füllung des Reaktors mit umzuwandelnder Masse bis zu dessen End-Trocknung wie oben angegeben) 50% des Kohlenstoffs der ursprünglich eingefüllten umzuwandelnden Masse in der Reaktoreinheit 72 umgesetzt. Vorzugsweise kann zwischen 50% und 100% der (Bio-)Kohle umgesetzt werden.

Die Reaktoreinheit 72 ist bzw. wirkt insbesondere nach Art eines Flugstromvergasers bzw. nach Art des Koppers-Totzek-Verfahrens. Dabei wird die zermahlene Trockensubstanz mittels einer Druckquelle 74 (vorzugsweise durch eine Gasströmung aus Wasserdampf und/oder Sauerstoff) eingeblasen, z.B. bei 40 bar. Bei Bereitstellung von Sauerstoff von der Druckquelle 74 kann dieser beispielsweise mittels Elektrolyse gewonnen werden. Bei einer hohen Temperatur (insbesondere bei 700°C bis 1100°C oder bei 1600°C bis 1800°C oder bei 1400 bis 1800°C) wird die zermahlene Trockensubstanz in einer Flugstaubflamme innerhalb nur weniger Sekunden vergast. Eine Wasserzufuhr 76 (z.B. Quenchwasser) verhindert ein etwaiges Anbacken von Asche in der Reaktoreinheit 72. Die im Wasserbad anfallende Asche kann als Schlacke entsorgt werden. Das Wasserbad kann auch als Gassperre für reaktive Gase verwendet werden.

Die Reaktoreinheit 72 kann auch mit einem integrierten oder externen Wärmetauscher zusammenwirken, um das Synthesegas 62 abzukühlen (z.B. auf 900°C bis 950°C), bevor es einer Reinigungsstufe 78 zugeführt wird. Die Abwärme des Synthesegases 62 kann beispielsweise ein Thermoöl erwärmen, welches optional für eine Beheizung des Dampfreformers 64 (z.B. über einen Thermomantel) genutzt wird.

In der Reinigungsstufe 78 wird das Synthesegas 62 gereinigt, z.B. bei 900°C bis 950°C und bei 25 bar. Die Reinigungsstufe 78 kann ein Gaswäscher sein oder einen Gaswäscher aufweisen. Unerwünschte Bestandteile (z.B. Schwefel) werden hierdurch abgesondert. Das dem Dampfreformer 64 zugeführte Synthesegas 62 hat beispielsweise eine Gaszusammensetzung aus H₂ (33 Vol-%), CO (60 Vol-%), CO₂ (6 Vol-%) und sonstigen Gasen (1 Vol-%). Das Synthesegas 62 wird vorzugsweise mit einem Druck von 40 bar dem Dampfreformer 64 zugeführt.

Wie bereits anhand von Fig. 4 erläutert, wird in der Phase Ph_2 Prozessdampf aus dem Reaktor 2 ausgelassen. Dieser Prozessdampf 69 wird mit seiner Arbeitstemperatur T_a (z.B. 183°C) und einem Arbeitsdruck p_a (z.B. 10 bar) an den Dampfreformer 64 geleitet. Dort wird der Prozessdampf 69 aufgeheizt. Dieses Aufheizen erfolgt vorzugsweise im sogenannten Batch-Betrieb bis auf 354,6°C. Die Dampfreformierung läuft vorzugsweise im Batch-Betrieb bei 354,6°C mittels eines Ni-Katalysators und mit überkritischem Dampf bei 221 bar ab.

Insbesondere finden folgende Reaktionen bei 450°C bis 500°C und bei 25 bar bis 30 bar im Dampfreformer statt:
CH₄ + H₂0 → CO + 3 H₂ (z.B. bei 800°C-900°C; 25-30 bar; Ni-Katalysator)
2 CH₄ + O₂ → CO + 4 H₂ (partielle Oxidation)
CO + H₂O → CO₂ + H₂

Unmittelbar nach dem Dampfreformer 64 steht ein Wasserstoffgas 80 mit einem hohen Reinheitsgrad (vorzugsweise ca. 80 Vol-%) zur Verfügung. Das Wasserstoffgas 80 wird optional dem Abgasdampferzeuger bzw. Wärmetauscher 82 zugeführt, bevor es zu einer Gaskühleinheit 84 geleitet wird. Der optional zwischengeschaltete Wärmetauscher 82 hat den Vorteil, dass das Wasserstoffgas 80 dort Wasser aufwärmen kann, welches dem Reaktor 2 ohnehin, z.B. über dessen Leitungseingang 16, zugeführt werden muss. In der Gaskühleinheit 84 wird das Wasserstoffgas 80 (weiter) heruntergekühlt (z.B. von 250°C auf 75°C).

In einem optionalen folgenden Verfahrensschritt wird das abgekühlte Wasserstoffgas 80 einer Reinigungseinheit 86 zugeführt. Dort wird Wasserstoff von den restlichen Bestandteilen des Wasserstoffgases 80 getrennt. Hierzu enthält die Reinigungseinheit 86 vorzugsweise einen spezifischen Membranfilter. Es werden Wasserstoff 88 und ein Restgasgemisch 90 getrennt und verschiedenen Speichern oder direkt anschließenden Verbrauchern und/oder Weiterverarbeitungsstufen zugeführt.

Der Reaktor 2 kann zumindest eine mit dem Füllraum 10 verbundene Beschickungseinrichtung 100, 100' zum Beschicken des Reaktorbehälters 3 bzw. des Füllraums 10 und/oder zur Vorbehandlung der umzuwandelnden Masse aufweisen. Beispielsweise ist wie in Fig. 1 dargestellt ein Beladungsbehälter 4 vorgesehen, der optional eine Zerkleinerungsvorrichtung zum Zerkleinern bzw. Homogenisieren von der Beschickungseinrichtung zugeführter umzuwandelnde Masse aufweist (z.B. Häcksler, Mahlwerk). Das so vorbehandelte Ausgangsmaterial kann dann wie oben beschrieben in den Reaktorbehälter 3 eingefüllt werden.

In Ausgestaltung kann eine alternative oder zusätzliche Beschickungseinrichtung 100' (in Fig. 5 gestrichelt dargestellt) zur Vorbehandlung der umzuwandelnden biogenen Masse und Kunststoffe vorgesehen sein. Die Beschickungseinrichtung weist zumindest einen Vorbehandlungsbehälter 102 mit zumindest einem Zulauf 52, 54 für umzuwandelnde Masse auf, wie oben beschrieben. Auch diese Beschickungseinrichtung 100' kann eine Zerkleinerungsvorrichtung zum Zerkleinern/Homogenisieren von der Beschickungseinrichtung 100' zugeführter umzuwandelnde Masse aufweisen. Eine mit dem Behandlungsbehälter 102 verbundene ph-Wert-Einstellvorrichtung 106 ist zum Einstellen eines gewünschten pH-Werts der umzuwandelnden Masse vorgesehen. Dabei wird der pH-Wert der umzuwandelnden Masse im Behandlungsbehälter 102 so eingestellt, dass Stoffe wie Schwermetalle, Schwefel und/oder Phospor aus der umzuwandelnden Masse heraus gelöst werden. Vorzugsweise ist eine weitere Heizvorrichtung 104 zum Aufheizen der im Behandlungsbehälter 102 aufgenommenen umzuwandelnden Masse vorgesehen, so dass die umzuwandelnde Masse aufgrund des Aufheizens Wasser in Form von Wasserdampf abgibt (Trocknung). Eine mit dem Behandlungsbehälter 102 verbundene Reinigungsvorrichtung 108 ist ausgebildet Flüssigkeit aus dem Behandlungsbehälter abzuziehen (z.B. mittels einer Pumpe), die abgezogene Flüssigkeit zu reinigen und die gereinigte Flüssigkeit dem Behandlungsbehälter (4, 102) und/oder dem Füllraum (10) zuzuführen.

In Ausgestaltung sind zumindest zwei wie oben beschriebene Reaktoren 2 vorgesehen, wobei ein Dampfausgang 28 zum Auslassen von Wasserdampf aus dem Füllraum 10 eines (ersten) Reaktors 2 mit einem Heizraum einer Heizvorrichtung zum Aufheizen eines Füllraums eines nachfolgenden (zweiten) Reaktors (nicht dargestellt) verbunden ist. Zusätzlich oder alternativ kann der Dampfausgang 28 des ersten Reaktors mit dem Füllraum und/oder einem Thermomantel des zweiten Reaktors verbunden sein. So kann beispielsweise zunächst der (exotherme) Umwandlungsprozess im ersten Reaktor 2 initialisiert werden und anschließend kann die dabei frei werdende Energie zum initialisieren des Umwandlungsprozesses im zweiten Reaktor verwendet werden, wobei die Energie mittels des erzeugten Wasserdampfs transportiert wird. Insbesondere können mehr als zwei Reaktoren vorgesehen sein, die auf diese Weise (kaskadenartig) miteinander verbunden sind, so dass der erzeugte Wasserdampf je nach Bedarf zwischen den Reaktoren und/oder dem oben beschriebenen Dampfreformer 64 verschoben werden kann.

### Bezugszeichenliste:

- 1: Gaserzeugungsvorrichtung
- 2: Reaktor
- 3: Reaktorbehälter
- 4: Beladungsbehälter
- 6: Einfüllstutzen
- 8: Auslassstutzen
- 9: Behälterwand (Reaktor)
- 10: Füllraum
- 11: Schleuse / Ventil / Schieber
- 12: Heizraum
- 14: Heizungseinrichtung
- 16: Leitungseingang (Wasser)
- 17: Leitungseingang (Wasser)
- 18: Thermomantel
- 20: Leitungsausgang
- 22: Steuerventil
- 24: Verbindungsleitung
- 26: Leitungseingang
- 28: Dampfausgang
- 29: Druckeinstelleinrichtung
- 30: Drehachse
- 32: Rührwerk und/oder Mahlwerk
- 34: Motoreinheit (Rührwerk)
- 36: Rührarme
- 38: Ablassstutzen
- 40: Mantelausgang
- 42: Verbindungsleitung
- 44: Leitungseingang
- 46: Filtereinheit
- 47: Kondensator
- 48: Gasdruckvorrichtung
- 49: Vakuumpumpe
- 50: Substanzbehälter (Kohle)
- 51: Substanzbehälter (Kohle)
- 52: Zulauf (flüssige Biomasse / Kunststoffe)
- 53: Wasserbehälter

- 54: Zulauf (feste Biomasse / Kunststoffe)
- 56: Eingang
- 62: Synthesegas
- 64: Dampfreformer
- 66: Reinigungseinheit
- 68: Siebboden
- 69: Prozessdampf
- 69a: Verbindungsleitung für Prozessdampf
- 69-A: Abdampf
- 70: Mahleinheit
- 71a,b: erste, zweite Fördereinheit
- 72: Reaktoreinheit / Synthesegaserzeugungseinrichtung
- 74: Druckquelle
- 76: Wasserzufuhr
- 78: Reinigungsstufe
- 80: Wasserstoff
- 82: Wärmetauscher
- 84: Gaskühleinheit
- 86: Reinigungseinheit
- 88: Wasserstoff
- 100, 100': Beschickungseinrichtung
- 102: Behandlungsbehälter
- 104: Heizvorrichtung
- 106: ph-Wert-Einstellvorrichtung
- 108: Reinigungsvorrichtung
- T_a: Arbeitstemperatur
- T_h: Haltetemperatur
- T_s: Starttemperatur
- p_a: Arbeitsdruck
- p_b: Betriebsdruck
- Δt_a: Arbeitszeitdauer
- Ph_1, Ph_2, Ph_3: Phase
- TS_g: Trockensubstanzgehalt

## Patentansprüche

1. Reaktor (2) zur Umwandlung von wasserhaltiger biogener Masse und/oder kohlenstoffhaltigen Kunststoffen in eine kohlenstoffhaltige Trockensubstanz mit einem Trockensubstanzgehalt (TS_g) von mindestens 85%, insbesondere von mindestens 90% und zur Erzeugung von Wasserdampf, wobei der Reaktor (2) aufweist:
eine Steuereinheit zum Steuern des Reaktorbetriebs,
einen Reaktorbehälter (3) mit einer Behälterwand (9),
einen von der Behälterwand (9) umgebenen Füllraum (10) zur Aufnahme der umzuwandelnden Masse,
ein innerhalb des Füllraums (10) angeordnetes Rührwerk (32),
eine Heizvorrichtung (12, 18) zum Aufheizen der im Füllraum (10) aufgenommenen umzuwandelnden Masse, so dass die umzuwandelnde Masse aufgrund des Aufheizens im Füllraum (10) Wasser in Form von Wasserdampf abgibt (Trocknung), wobei die Heizvorrichtung (12, 18) einen Heizraum (12) aufweist, der innerhalb des Füllraums (10) angeordnet ist, so dass der Heizraum (12) an seinem Außenumfang die Heizwärme in den Füllraum (10) abgibt,
einen Dampfausgang (28) zum Auslassen des Wasserdampfs, und
zumindest einen Substanzbehälter (50, 51) zur Aufnahme der Trockensubstanz, wobei der zumindest eine Substanzbehälter über einen Auslass (8) an der Behälterwand (9) mit dem Füllraum (10) verbunden ist,
wobei das Rührwerk (32) dazu ausgelegt ist, während der Trocknung eine Aggregation bzw. Verfestigung der Trockenmasse im Füllraum (10) zu verhindern,
**dadurch gekennzeichnet, dass**
der Heizraum (12) einen Leitungseingang (16) zum Einleiten von Wasser und/oder Wasserdampf aufweist, so dass für die Heizfunktion Dampf in dem Heizraum (12) selbst erzeugbar und/oder von außen in den Heizraum (12) transportierbar ist, und
zur Versorgung des Füllraums (10) mit Dampf ein Leitungseingang des Füllraums (10) mit einem Leitungsausgang des Heizraums (12) unterbrechbar verbunden ist.

2. Reaktor nach Anspruch 1,wobei das Rührwerk (32) dazu ausgelegt ist, während der Trocknung der umzuwandelnden Masse die umzuwandelnde Masse umzuwälzen, und/oder
wobei das Rührwerk (32) dazu ausgelegt ist, nach der Trocknung die Trockensubstanz in Richtung Auslass zu fördern, so dass die Trocknungssubstanz aus dem Füllraum (10) in den zumindest einen Substanzbehälter (50, 51) gefördert wird.

3. Reaktor nach Anspruch 1 oder 2, wobei über eine Verbindungsleitung (69a) zumindest ein Teil des aus dem Dampfausgang (28) ausgelassenen Wasserdampfes dem Substanzbehälter (50, 51) zugeführt wird, wo der Wasserdampf beim Durchtritt durch die im Substanzbehälter (50, 51) gelagerte Trockensubstanz gereinigt wird, wobei insbesondere zumindest ein Substanzbehälter (50, 51) eine Heizeinrichtung zum Aufheizen bzw. Trocknen von im Substanzbehälter aufgenommener Trockensubstanz aufweist, und/oder
wobei über eine weitere Verbindungsleitung zumindest ein Teil des aus dem Dampfausgang (28) ausgelassenen Wasserdampfes einem weiteren Reaktor zugeführt wird, insbesondere einer Heizvorrichtung zum Aufheizen von in einem Füllraum (10) aufgenommener umzuwandelnder Masse eines weiteren Reaktors zugeführt wird und/oder einem Füllraum (10) eines weiteren Reaktors zugeführt wird.

4. Reaktor nach einem der vorhergehenden Ansprüche, wobei mittels der Heizvorrichtung (12, 18) die Temperatur und vorzugsweise der Druck im Füllraum (10) derart einstellbar ist, dass während der Umwandlung der umzuwandelnden Masse keine oder im Wesentlichen keine Vergasung (Pyrolyse) der biogenen Masse und/oder der auf Kohlenstoff basierenden Kunststoffe erfolgt.

5. Reaktor nach einem der vorhergehenden Ansprüche, wobei am Dampfausgang (28) eine Druckeinstelleinrichtung (29) angeordnet ist, mittels der der Wasserdampf aus dem Dampfausgang (28) bei Erreichen eines vorgegebenen Arbeitsdrucks (p_a) und/oder bei Erreichen einer vorgegebenen Arbeitstemperatur (T_a) ausgelassen werden kann.

6. Verwendung eines Reaktors nach einem der vorhergehenden Ansprüche in einer Gaserzeugungsvorrichtung (1) zur Herstellung von Wasserstoff, wobei die Gaserzeugungsvorrichtung aufweist:
zumindest einen Reaktor (2) nach einem der vorhergehenden Ansprüche zur Erzeugung von Wasserdampf, wobei ein Heizraum (12) des Reaktors (2) einen Leitungseingang (16) zum Einleiten von Wasser und/oder Wasserdampf aufweist, so dass für die Heizfunktion Dampf in dem Heizraum (12) selbst erzeugbar und/oder von außen in den Heizraum (12) transportierbar ist, und wobei zur Versorgung eines Füllraums (10) des Reaktors (2) mit Dampf ein Leitungseingang des Füllraums (10) mit einem Leitungsausgang des Heizraums (12) unterbrechbar verbunden ist,
eine Synthesegaserzeugungseinrichtung (72) zur Erzeugung von Synthesegas, und
einen Dampfreformer (64), der ausgelegt ist, um aus Wasserdampf und Synthesegas Wasserstoff zu erzeugen, wobei dem Dampfreformer (64) über eine erste Verbindungsleitung (69) der Wasserdampf aus dem Reaktor (2) zugeführt wird und über eine zweite Verbindungsleitung (62) das Synthesegas aus der Synthesegaserzeugungseinrichtung (72) zugeführt wird.

7. Verwendung in einer Gaserzeugungsvorrichtung nach Anspruch 6, wobei eine Fördereinrichtung (71a-b) den Substanzbehälter (50, 51) mit der Synthesegaserzeugungseinrichtung (72) verbindet und dazu ausgelegt ist, die Trockensubstanz zur Synthesegaserzeugungseinrichtung (72) zu fördern,

8. Verwendung in einer Gaserzeugungsvorrichtung nach Anspruch 6 oder 7, wobei eine Mahleinheit (70) vorgesehen ist, die die Trockensubstanz aus dem Substanzbehälter (50, 51) zerkleinert, so dass die zerkleinerte Trockensubstanz der Synthesegaserzeugungseinrichtung (72) als zerkleinerte Partikel, insbesondere als Granulat und/oder Staub, zugeführt werden kann, wobei insbesondere die Fördereinrichtung (71a-b) eine erste Fördereinheit (71a) zum Fördern der Trockensubstanz vom Substanzbehälter (50, 51) zur Mahleinheit (70) und/oder eine zweite Fördereinheit (71b) zum Fördern der zerkleinerten Trockensubstanz von der Mahleinheit (70) zur Synthesegaserzeugungseinrichtung (72) aufweist.

9. Verwendung in einer Gaserzeugungsvorrichtung nach einem der Ansprüche 6, 7 oder 8, mit zumindest zwei Reaktoren (2), wobei ein Dampfausgang (28) zum Auslassen von Wasserdampf aus dem Füllraum (10) eines Reaktors (2) mit einem Heizraum (12) einer Heizvorrichtung (12, 18) zum Aufheizen eines Füllraums (10) eines nachfolgenden Reaktors (2) verbunden ist und/oder mit einem Füllraum (10) eines nachfolgenden Reaktors (2) verbunden ist.

10. Verfahren zur Umwandlung von wasserhaltiger biogener Masse und/oder kohlenstoffhaltiger Kunststoffe in eine kohlenstoffhaltige Trockensubstanz mit einem Trockensubstanzgehalt (TS_g) von mindestens 85%, insbesondere von mindestens 90% und zur Erzeugung von Wasserdampf, insbesondere mit einem Reaktor (2) nach einem der vorhergehenden Ansprüche 1 bis 5, wobei das Verfahren die Schritte aufweist:
Einfüllen der umzuwandelnden Masse in einen Füllraum (10) eines Reaktors (2), wobei insbesondere vor, nach oder zusammen mit dem Einfüllen von umzuwandelnder Masse in den Füllraum (10) zusätzlich kohlenstoffhaltige Trockensubstanz in den Füllraum (10) eingefüllt wird,
Aufheizen der umzuwandelnden Masse im Füllraum (10) auf eine vorgegebene Arbeitstemperatur (T_a) oder einen vorgegebenen Arbeitstemperaturbereich und Einstellen eines vorgegebenen Arbeitsdrucks (p_a) oder eines Arbeitsdruckbereichs, wobei für die Heizfunktion Dampf in dem Heizraum (12) der Heizvorrichtung (12, 18) selbst erzeugt und/oder von außen in den Heizraum (12) transportiert wird, und wobei der Füllraum (10) mit Dampf aus dem Heizraum (12) versorgt wird,
Auslassen von Prozessdampf (69) aus dem Füllraum (10) unter Beibehaltung der Temperatur bei der vorgegebenen Arbeitstemperatur oder im vorgegebenen Arbeitstemperaturbereich und unter Beibehaltung des Drucks bei dem vorgegebenen Arbeitsdruck oder im vorgegebenen Arbeitsdruckbereich,
während der Umwandlung der umzuwandelnden Masse zeitweise oder kontinuierliches Durchmischen und/oder Umwälzen der umzuwandelnden Masse im Füllraum, vorzugsweise mittels eines innerhalb des Füllraums (10) angeordneten Rührwerks (32) und/oder Mahlwerks.

11. Verfahren nach Anspruch 10, wobei die Temperatur bei der vorgegebenen Arbeitstemperatur (T_a) oder im vorgegebenen Arbeitstemperaturbereich und/oder der Druck bei dem vorgegebenen Arbeitsdruck (p_a) oder im vorgegebenen Arbeitsdruckbereich während einer vorgegebenen Arbeitszeitdauer (Δt_a) aufrechterhalten werden, und
wobei insbesondere:
nach dem Ablauf der Arbeitszeitdauer (Δt_a) der Füllraum (10) auf einen vorbestimmten Betriebsdruck (p_b) evakuiert wird, und
während der Evakuierung des Füllraumes (10) vom Arbeitsdruck (p_a) auf den Betriebsdruck (p_b) aus dem Füllraum (10) Wasser in Form von Wasserdampf abgezogen wird, und vorzugsweise bei eingestelltem Betriebsdruck (p_b) eine vorbestimmte Haltetemperatur (T_h) der umzuwandelnden Masse zumindest zeitweise aufrechterhalten wird.

12. Verfahren nach Anspruch 11,
wobei der aus dem Füllraum (10) ausgelassene Prozessdampf (69) einem Dampfreformer (64) zur Erzeugung von Wasserstoff (80, 88) zugeführt wird, und/oder
wobei die im Reaktor (2) aus der umzuwandelnden Masse umgewandelte Trockensubstanz (51) zur Erzeugung von Synthesegas (62) einer Synthesegaserzeugungseinrichtung (72) zugeführt wird, wobei das erzeugte Synthesegas vorzugsweise einem Dampfreformer (64) zur Erzeugung von Wasserstoff (80, 88) zugeführt wird.

13. Verfahren nach einem der Ansprüche 11 oder 12,
wobei die Arbeitstemperatur (T_a) in einem Bereich von 170°C bis 250°C, insbesondere bei 183°C liegt, und/oder
wobei der Arbeitsdruck (p_a) in einem Bereich von 8 bar bis 20 bar, insbesondere 10 bar bis 11 bar liegt, und/oder
wobei die Arbeitszeitdauer (Δt_a) von 1,50 Std. bis 6 Std., insbesondere 2 Std. beträgt, und/oder
wobei die vorbestimmte Haltetemperatur (T_h) des evakuierten Füllraumes (10) 50°C bis 100°C, insbesondere 75°C beträgt, und/oder
wobei die umzuwandelnde Masse nach Beendigung der Evakuierung des Füllraums (10) einen Trockensubstanzgehalt (TS_g) von mindestens 50%, insbesondere mindestens 85 % hat.

14. Verfahren nach einem der vorhergehenden Ansprüche 11 bis 13, wobei das Verfahren vor dem Einfüllen umzuwandelnder Masse in einen Füllraum (10) eines Reaktors (2) die Schritte aufweist:
Einfüllen der umzuwandelnden Masse in einen Vorbehandlungsbehälter (102),
Einstellen eines gewünschten ph-Werts der umzuwandelnden Masse zum Herauslösen von Stoffen wie Schwermetallen aus der umzuwandelnden Masse, und
Abziehen von Flüssigkeit mit den heraus gelösten Stoffen aus dem Behandlungsbehälter (102), Reinigen der abgezogenen Flüssigkeit und Zuführen der gereinigten Flüssigkeit in den Behandlungsbehälter (102) und/oder in den Füllraum (10) des Reaktors,
insbesondere Aufheizen der Masse im Behandlungsbehälter (102) auf eine vorgegebene Vorbehandlungstemperatur oder einen vorgegebenen Vorbehandlungstemperaturbereich und Einstellen eines vorgegebenen Vorbehandlungsdrucks oder eines Vorbehandlungsdruckbereichs vor oder nach dem Einstellen des gewünschten ph-Werts.

## Claims

1. Reactor (2) for converting water-containing biogenic mass and/or carbon-containing synthetic material into a carbon-containing dry matter with a dry matter content (TS_g) of at least 85%, in particular at least 90%, and for generating water vapour, wherein the reactor (2) comprises:
a control unit for controlling the operation of the reactor,
a reactor container (3) with a container wall (9),
a filling chamber (10) surrounded by the container wall (9) for receiving the mass to be converted,
a stirrer (32) arranged within the filling chamber (10),
a heating device (12, 18) for heating the mass to be converted received in the filling chamber (10), such that the mass to be converted releases water in form of water vapour due to the heating up in the filling chamber (10) (drying), wherein the heating device (12, 18) comprises a heating chamber (12) which is arranged within the filling chamber (10), such that the heating chamber (12) at its outer circumference gives off heat into the filling chamber (10),
a vapour outlet (28) for discharging the water vapour, and
at least one substance container (50, 51) for receiving the dry matter, wherein the at least one substance container is connected via an outlet (8) at the container wall (9) to the filling chamber (10),
wherein the stirrer (32) is adapted to prevent during drying aggregation and solidification, respectively, of the dry matter in the filling chamber (10),
**characterized in that**
the heating chamber (12) comprises a line inlet (16) for feeding water and/or water vapour, such that for the heating function water vapour is generatable in the heating chamber (12) itself and/or is transportable from outside into the heating chamber (12), and
for supplying the filling chamber (10) with water vapour a line inlet of the filling chamber (10) is interruptedly connected with a line outlet of the heating chamber (12).

2. Reactor according to claim 1, wherein the stirrer (32) is adapted to circulate the mass to be converted during the drying of the mass to be converted, and/or
wherein the stirrer (32) is adapted to transport the dry matter towards the outlet after drying, such that the dry matter is conveyed out of the filling chamber (10) into the at least one substance container (50, 51).

3. Reactor according to claim 1 or 2, wherein via a connecting line (69a) at least a part of the water vapour released from the vapour outlet (28) is supplied to the substance container (50, 51), where the water vapour is cleaned when passing through the dry matter stored in the substance container (50, 51), wherein in particular at least one substance container (50, 51) comprises a heater for heating up and drying, respectively, of dry matter received in the substance container, and/or
wherein via a further connecting line at least a part of the water vapour released from the vapour outlet (28) is supplied to a further reactor, in particular supplied to a heating device for heating up mass to be converted received in a filling chamber (10) of a further reactor and/or supplied to a filling chamber (10) of a further reactor.

4. Reactor according to one of the previous claims, wherein by means of the heating device (12, 18) the temperature and preferably the pressure in the filling chamber (10) is settable such that during conversion of the mass to be converted no or substantially no gasification (pyrolysis) of the biogenic mass and/or the synthetic substances based on carbon occurs.

5. Reactor according to one of the previous claims, wherein a pressure setting device (29) is arranged at the vapour outlet (28), by means of which the water vapour can be released out of the vapour outlet (18) when reaching a predetermined operating pressure (p-a) and/or when reaching a predetermined operating temperature (T_a).

6. Use of a reactor according to one of the previous claims in a gas generating device (1) for generating hydrogen, wherein the gas generating device comprises:
at least one reactor (2) according to one of the previous claims for generating water vapour, wherein a heating chamber (12) of the reactor (2) comprises a line inlet (16) for feeding water and/or water vapour, such that for the heating function water vapour is generatable in the heating chamber (12) itself and/or is transportable from the outside into the heating chamber (12), and wherein for supplying a filling chamber (10) of the reactor (2) with water vapour a line inlet of the filling chamber (10) is interruptedly connected to a line outlet of the heating chamber (12),
a synthesis gas generating means (72) for generating synthesis gas, and
a steam reformer (64) which is adapted to generate hydrogen from water vapour and synthesis gas, wherein the steam reformer (64) is supplied via first connecting line (69) with the water vapour from the reactor (2) and is supplied via a second connecting line (62) with the synthesis gas from the synthesis gas generating means (72).

7. Use in a gas generating device according to claim 6, wherein a conveying means (71a-b) connects the substance container (50, 51) with the synthesis gas generating means (72) and is adapted to convey the dry matter to the synthesis gas generating means (72).

8. Use in a gas generating device according to claim 6 or 7, wherein a grinding unit (70) is provided to comminute the dry matter of the substance container (50, 51), such that the comminuted dry matter can be supplied to the synthesis gas generating means (72) as comminuted particles, in particular as granulate and/or dust, wherein in particular the conveying means (71a-b) comprises a first conveying unit (71a) for conveying the dry matter from the substance container (50, 51) to the grinding unit (70), and/or a second conveying unit (71b) for conveying the comminuted dry matter from grinding unit (70) to the synthesis gas generating means (72).

9. Use in a gas generating device according to one of claims 6, 7 or 8, with at least two reactors (2), wherein a vapour outlet (28) for releasing water vapour out of the filling chamber (10) of a reactor (2) is connected to a heating chamber (12) of a heating device (12, 18) for heating up a filling chamber (10) of a subsequent reactor (2) and/or is connected to a filling chamber (10) of a subsequent reactor (2).

10. Method for converting water-containing biogenic mass and/or carbon-containing synthetic substances into a carbon-containing dry matter with a dry matter content (TS_g) of at least 85%, in particular at least 90%, and for generating water vapour, in particular with a reactor (2) according to one of the previous claims 1 to 5, wherein the method comprises the steps:
filling the mass to be converted into a filling chamber (10) of a reactor (2), wherein in particular before, after or together with the filling of mass to be converted into the filling chamber (10) additionally carbon containing dry matter is filled into the filling chamber (10),
heating up the mass to be converted in the filling chamber (10) to a predetermined operating temperature (T_a) or a predetermined operating temperature range and setting a predetermined operating pressure (p_a) or operating pressure range, wherein for the heating function water vapour is generated in the heating chamber (12) of the heating device (12, 18) itself and/or is transported from the outside into the heating chamber (12), and wherein the filling chamber (10) is supplied with vapour from the heating chamber (12),
releasing process vapour (69) from the filling chamber (10) while maintaining the temperature at the predetermined operating temperature or predetermined operating temperature range and while maintaining the pressure at the predetermined operating pressure or operating pressure range,
during the conversion of the mass to be converted temporarily or continuously mixing and/or circulating the mass to be converted in the filling chamber, preferably by means of a stirrer (32) and/or grinding device arranged within the filling chamber (10).

11. Method according to claim 10, with maintaining the temperature at a predetermined operating temperature (T_a) or in a predetermined operating temperature range and/or the pressure at predetermined operating pressure (p_a) or operating pressure range during a predetermined operating time duration (Δt_a), and
wherein in particular:
after elapse of the operating time duration (Δt_a) the filling chamber (10) is evacuated to a predetermined working pressure (p_b), and
during evacuation of the filling chamber (10) from the operating pressure (p_a) to the working pressure (p_b) water in form of water vapour is withdrawn from the filling chamber (10), and preferably at the set working pressure (p_b) a predetermined hold temperature (T_h) of the mass to be converted is at least temporarily maintained.

12. Method according to claim 11,
wherein the process vapour (69) released from the filling chamber (10) is supplied to a steam reformer (64) for generating hydrogen (80, 88), and/or
wherein the dry mass (51) converted from the mass to be converted in the reactor (2) is supplied to a synthesis gas generating means (72) for generating synthesis gas (62), wherein the generated synthesis gas is preferably supplied to a steam reformer (64) for generating hydrogen (80, 88).

13. Method according to one of claims 11 or 12,
wherein the operating temperature (T_a) is in the range of 170°C to 250°C, in particular at 183°C, and/or
wherein the operating pressure (p_a) is in the range of 8 bar to 20 bar, in particular 10 bar to 11 bar, and/or
wherein the operating time duration (Δt_a) is from 1,50 h to 6 h, in particular 2 h, and/or
wherein the predetermined hold temperature (T_h) of the evacuated filling chamber (10) is 50°C to 100°C, in particular 75°C, and/or
wherein after completion of evacuating the filling chamber (10) the mass to be converted has a dry matter content (TS_g) of at least 50%, in particular at least 85%.

14. Method according to one of the previous claims 11 to 13, wherein the method comprises before filling the mass to be converted into a filling chamber (10) of a reactor (2) the steps:
filling the mass to be converted into a pretreatment container (102),
setting a desired pH-value of the mass to be converted to dissolve substances like heavy metals from the mass to be converted, and
draining liquid with the dissolved substances out of the treatment container (102), cleaning the drained liquid and supplying the cleaned liquid into the treatment container (102) and/or into the filling chamber (10) of the reactor,
in particular heating up the mass in the treatment container (102) to a predetermined pretreatment temperature or a predetermined pretreatment temperature range and setting a predetermined pretreatment pressure or a pretreatment pressure range before or after setting the desired pH-value.

## Revendications

1. Réacteur (2) pour convertir une masse biogène contenant de l'eau et/ou des matières plastiques contenant du carbone en une substance sèche contenant du carbone présentant une teneur en substance sèche (TS_g) d'au moins 85 %, en particulier d'au moins 90 %, et pour générer de la vapeur d'eau, dans lequel le réacteur (2) présente :
une unité de commande pour commander le fonctionnement du réacteur,
un récipient de réacteur (3) avec une paroi de récipient (9),
une chambre de remplissage (10) entourée par la paroi de récipient (9) pour recevoir la masse à convertir,
un agitateur (32) disposé à l'intérieur de l'espace de remplissage (10),
un dispositif de chauffage (12, 18) pour chauffer la masse à convertir reçue dans la chambre de remplissage (10), de sorte que la masse à convertir libère de l'eau sous forme de vapeur d'eau (séchage) en raison du chauffage dans la chambre de remplissage (10), dans lequel le dispositif de chauffage (12, 18) présente une chambre de chauffage (12) qui est disposée à l'intérieur de la chambre de remplissage (10), de sorte que la chambre de chauffage (12) libère la chaleur de chauffage dans la chambre de remplissage (10) sur sa périphérie extérieure,
une sortie de vapeur (28) pour évacuer la vapeur d'eau, et
au moins un récipient de substance (50, 51) pour recevoir la substance sèche, dans lequel le au moins un récipient de substance est relié à la chambre de remplissage (10) par une sortie (8) au niveau de la paroi de récipient (9),
dans lequel l'agitateur (32) est conçu pour empêcher l'agrégation ou la solidification de la masse sèche dans la chambre de remplissage (10) pendant le séchage,
**caractérisé en ce que**
la chambre de chauffage (12) présente une entrée de conduite (16) pour l'introduction d'eau et/ou de vapeur d'eau, de sorte que de la vapeur peut être générée dans la chambre de chauffage (12) elle-même et/ou transportée depuis l'extérieur jusque dans la chambre de chauffage (12) pour la fonction de chauffage, et
pour alimenter la chambre de remplissage (10) en vapeur, une entrée de conduite de la chambre de remplissage (10) est reliée de manière pouvant être interrompue à une sortie de conduite de la chambre de chauffage (12).

2. Réacteur selon la revendication 1, dans lequel l'agitateur (32) est conçu pour faire circuler la masse à convertir pendant le séchage de la masse à convertir, et/ou
dans lequel l'agitateur (32) est conçu pour transporter la substance sèche dans la direction de la sortie après le séchage, de sorte que la substance sèche est transportée à l'extérieur de la chambre de remplissage (10) jusque dans le au moins un récipient de substance (50, 51).

3. Réacteur selon la revendication 1 ou 2, dans lequel au moins une partie de la vapeur d'eau évacuée de la sortie de vapeur (28) est amenée au récipient de substance (50, 51) par l'intermédiaire d'une conduite de liaison (69a), où la vapeur d'eau est purifiée lors du passage à travers la substance sèche stockée dans le récipient de substance (50, 51), en particulier dans lequel au moins un récipient de substance (50, 51) présente un dispositif de chauffage pour le chauffage ou le séchage de la substance sèche reçue dans le récipient de substance, et/ou
au moins une partie de la vapeur d'eau évacuée de la sortie de vapeur (28) est amenée à un réacteur supplémentaire par l'intermédiaire d'une conduite de liaison supplémentaire, en particulier est amenée à un dispositif de chauffage pour chauffer la masse à convertir reçue dans une chambre de remplissage (10) d'un réacteur supplémentaire et/ou est amenée à une chambre de remplissage (10) d'un réacteur supplémentaire.

4. Réacteur selon l'une quelconque des revendications précédentes, dans lequel la température et de préférence la pression dans la chambre de remplissage (10) peuvent être ajustées au moyen du dispositif de chauffage (12, 18) de telle sorte que pendant la conversion de la masse à convertir, il n'y a pas ou pratiquement pas de gazéification (pyrolyse) de la masse biogène et/ou des matières plastiques à base de carbone.

5. Réacteur selon l'une quelconque des revendications précédentes, dans lequel un dispositif d'ajustement de pression (29) est agencé au niveau de la sortie de vapeur (28), au moyen duquel la vapeur d'eau peut être évacuée de la sortie de vapeur (28) lorsqu'une pression de travail prédéterminée (p_a) est atteinte et/ou lorsqu'une température de travail prédéterminée (T_a) est atteinte.

6. Utilisation d'un réacteur selon l'une quelconque des revendications précédentes dans un dispositif générateur de gaz (1) pour produire de l'hydrogène, ledit dispositif générateur de gaz comprenant :
au moins un réacteur (2) selon l'une des revendications précédentes pour la génération de vapeur d'eau, dans lequel une chambre de chauffage (12) du réacteur (2) présente une entrée de conduite (16) pour l'introduction d'eau et/ou de vapeur d'eau, de sorte que pour la fonction de chauffage, de la vapeur peut être générée dans la chambre de chauffage (12) elle-même et/ou peut être transportée depuis l'extérieur jusque dans la chambre de chauffage (12), et dans lequel pour l'alimentation en vapeur d'une chambre de remplissage (10) du réacteur (2), une entrée de conduite de la chambre de remplissage (10) est reliée de manière pouvant être interrompue à une sortie de conduite de la chambre de chauffage (12),
un dispositif générateur de gaz de synthèse (72) pour générer du gaz de synthèse, et
un reformeur à vapeur (64) qui est conçu pour générer de l'hydrogène à partir de vapeur d'eau et de gaz de synthèse, dans lequel la vapeur d'eau est fournie au reformeur à vapeur (64) par l'intermédiaire d'une première conduite de connexion (69) depuis le réacteur (2) et le gaz de synthèse est fourni depuis le dispositif générateur de gaz de synthèse (72) par l'intermédiaire d'une seconde conduite de connexion (62).

7. Utilisation dans un dispositif de génération de gaz selon la revendication 6, dans laquelle un dispositif de transport (71a-b) relie le récipient de substance (50, 51) au dispositif générateur de gaz de synthèse (72) et est conçu pour transporter la substance sèche vers le dispositif générateur de gaz de synthèse (72).

8. Utilisation dans un dispositif générateur de gaz selon la revendication 6 ou 7, dans laquelle une unité de broyage (70) est prévue, qui broyé la substance sèche à l'extérieur du récipient de substance (50, 51) de telle sorte que la substance sèche broyée puisse être amenée au dispositif générateur de gaz de synthèse (72) sous forme de particules broyées, en particulier sous forme de granulés et/ou de poussière, dans laquelle le dispositif de transport (71a-b) présente en particulier une première unité de transport (71a) pour transporter la substance sèche depuis le récipient de substance (50, 51) vers l'unité de broyage (70) et/ou une seconde unité de transport (71b) pour transporter la substance sèche broyée depuis l'unité de broyage (70) vers le dispositif générateur de gaz de synthèse (72).

9. Utilisation dans un dispositif générateur de gaz selon l'une quelconque des revendications 6, 7 ou 8, avec au moins deux réacteurs (2), dans laquelle une sortie de vapeur (28) pour évacuer la vapeur d'eau à partir de la chambre de remplissage (10) d'un réacteur (2) est reliée à une chambre de chauffage (12) d'un dispositif de chauffage (12, 18) pour chauffer une chambre de remplissage (10) d'un réacteur suivant (2) et/ou est reliée à une chambre de remplissage (10) d'un réacteur suivant (2).

10. Procédé de conversion d'une masse biogène contenant de l'eau et/ou de matières plastiques contenant du carbone en une substance sèche contenant du carbone présentant une teneur en substance sèche (TS_g) d'au moins 85 %, en particulier d'au moins 90%, et de génération de vapeur d'eau, en particulier avec un réacteur (2) selon l'une quelconque des revendications précédentes 1 à 5, le procédé comprenant les étapes consistant à :
remplir une chambre de remplissage (10) d'un réacteur (2) avec la masse à convertir, dans lequel en particulier avant, après ou en même temps que le remplissage de la chambre de remplissage (10) avec la masse à convertir, de la substance sèche contenant du carbone supplémentaire est introduite dans la chambre de remplissage (10),
chauffer la masse à convertir dans la chambre de remplissage (10) à une température de travail (T_a) ou à une plage de température de travail prédéterminée et ajuster une pression de travail (p_a) ou une plage de pression de travail prédéterminée, dans lequel de la vapeur est générée dans la chambre de chauffage (12) du dispositif de chauffage (12, 18) et/ou transportée depuis l'extérieur jusque dans la chambre de chauffage (12) pour la fonction de chauffage, et dans lequel la chambre de remplissage (10) est alimentée en vapeur à partir de la chambre de chauffage (12),
évacuer la vapeur de processus (69) à partir de la chambre de remplissage (10) tout en maintenant la température à la température de travail prédéterminée ou dans la plage de température de travail prédéterminée et en maintenant la pression à la pression de travail prédéterminée ou dans la plage de pression de travail prédéterminée,
pendant la conversion de la masse à convertir, mélanger et/ou mettre en circulation de manière temporaire ou continue la masse à convertir dans l'espace de remplissage, de préférence au moyen d'un agitateur (32) et/ou d'un broyeur disposé à l'intérieur de l'espace de remplissage (10).

11. Procédé selon la revendication 10, dans lequel la température à la température de travail prédéterminée (T_a) ou dans la plage de température de travail prédéterminée et/ou la pression à la pression de travail prédéterminée (p_a) ou dans la plage de pression de travail prédéterminée sont maintenues pendant une durée de travail prédéterminée (Δt_a), et dans lequel en particulier :
après la fin de la durée de travail (Δt_a), la chambre de remplissage (10) est évacuée à une pression de service prédéterminée (p_b), et
pendant l'évacuation de la chambre de remplissage (10), de l'eau sous forme de vapeur d'eau est extraite de la chambre de remplissage (10) de la pression de travail (p_a) à la pression de service (p_b) et, de préférence, une température de maintien prédéterminée (T_h) de la masse à convertir est maintenue au moins temporairement lorsque la pression de service (p_b) est ajustée.

12. Procédé selon la revendication 11,
dans lequel la vapeur de processus (69) évacuée de la chambre de remplissage (10) est amenée à un reformeur à vapeur (64) pour générer de l'hydrogène (80, 88), et/ou
dans lequel la substance sèche (51) convertie dans le réacteur (2) à partir de la masse à convertir est amenée vers un dispositif générateur de gaz de synthèse (72) pour générer du gaz de synthèse (62), dans lequel le gaz de synthèse généré est amené de préférence vers un reformeur à vapeur (64) pour générer de l'hydrogène (80, 88).

13. Procédé selon l'une quelconque des revendications 11 à 12,
dans lequel la température de travail (T_a) est dans une plage de 170°C à 250°C, en particulier de 183°C, et/ou
dans lequel la pression de travail (p_a) se situe dans une plage de 8 bar à 20 bar, en particulier de 10 bar à 11 bar, et/ou
dans lequel la durée du travail (Δt_a) est de 1,50 à 6 heures, en particulier de 2 heures, et/ou
dans lequel la température de maintien prédéterminée (T_h) de la chambre de remplissage évacuée (10) est comprise entre 50°C et 100°C, en particulier de 75°C, et/ou
dans lequel la masse à convertir présente, après la fin de l'évacuation de l'espace de remplissage (10), une teneur en substance sèche (TS_g) d'au moins 50 %, en particulier d'au moins 85 %.

14. Procédé selon l'une quelconque des revendications précédentes 11 à 13, dans lequel le procédé comprend les étapes suivantes avant le remplissage d'un espace de remplissage (10) d'un réacteur (2) par une masse à convertir :
un remplissage d'un récipient de prétraitement (102) par la masse à convertir,
un ajustement d'une valeur de pH souhaitée de la masse à convertir pour séparer des substances telles que les métaux lourds à partir de la masse à convertir, et
un retrait du liquide contenant les substances dissoutes à partir du récipient de traitement (102), une purification du liquide retiré et une introduction du liquide purifié dans le récipient de traitement (102) et/ou dans l'espace de remplissage (10) du réacteur,
en particulier, le chauffage de la masse dans le récipient de traitement (102) à une température de prétraitement prédéterminée ou à une plage de température de prétraitement prédéterminée et l'ajustement d'une pression de prétraitement prédéterminée ou d'une plage de pression de prétraitement avant ou après l'ajustement de la valeur de pH souhaitée.
